(19) Europäisches Patentamt
European Patent Office
Office européen des brevets

(11) Veröffentlichungsnummer: **0 260 557 B1**

(12) # EUROPÄISCHE PATENTSCHRIFT

(45) Veröffentlichungstag der Patentschrift: **27.11.91**

(51) Int. Cl.5: **C09B 45/14**, C09B 56/02, D06P 1/10

(21) Anmeldenummer: **87113026.6**

(22) Anmeldetag: **07.09.87**

Die Akte enthält technische Angaben, die nach dem Eingang der Anmeldung eingereicht wurden und die nicht in dieser Patentschrift enthalten sind.

(54) **Asymmetrische 1:2 Metallkomplexfarbstoffe.**

(30) Priorität: **18.09.86 DE 3631753**

(43) Veröffentlichungstag der Anmeldung:
**23.03.88 Patentblatt 88/12**

(45) Bekanntmachung des Hinweises auf die Patenterteilung:
**27.11.91 Patentblatt 91/48**

(84) Benannte Vertragsstaaten:
**CH DE ES FR GB IT LI**

(56) Entgegenhaltungen:
**EP-A- 0 095 441**

**CHEMICAL ABSTRACTS, Band 84, Nr. 16, 19. April 1976, Seite 77Nr. 107058m, Columbus, Ohio, US; & DD-A-111 090 (EAST) 20-01-1975**

(73) Patentinhaber: **BAYER AG**

**W-5090 Leverkusen 1 Bayerwerk(DE)**

(72) Erfinder: **Mennicke, Winfried, Dr.**
**Steglitzer Strasse 8**
**W-5090 Leverkusen 1(DE)**

**EP 0 260 557 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind 1:2-Metallkomplexfarbstoffe der Formel

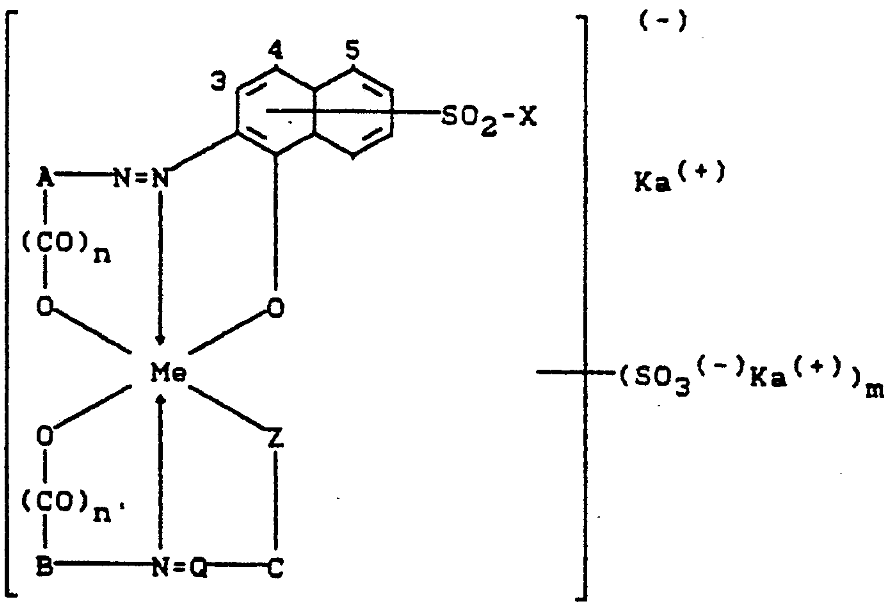

(I),

worin

| | |
|---|---|
| $SO_2$-X | in 3-, 4- oder 5-Stellung steht, |
| X | $NH_2$, durch Alkyl, Cycloalkyl, Aralkyl oder Aryl mono- oder disubstituiertes $NH_2$ oder Alkyl, |
| A | einen Rest der Benzol- oder Naphthalinreihe mit zur Azogruppe o-ständiger Hydroxy- oder Carboxygruppe, |
| B | einen Rest der Benzol- oder Naphthalinreihe mit zur Azo- bzw. Azomethingruppe o-ständiger Hydroxy- oder Carboxygruppe, |
| C | einen Rest einer carbocyclischen oder heterocyclischen Kupplungskomponente, wenn Q Stickstoff ist, wobei die metallbindende Gruppe Z in o-Stellung zur Azogruppe steht, oder, falls Q die CH-Gruppe ist, den Rest eines o-Hydroxyaldehyds, |
| Q | Stickstoff oder CH, |
| Z | Sauerstoff, NH oder N-Alkyl, |
| Me | Chrom oder Kobalt, |
| n, n' | unabhängig voneinander 0 oder 1, |
| m | 1, 2 oder 3 und |
| $Ka^{(+)}$ | ein Kation bedeuten, wobei |

die Reste A, B und C weitere in der Chemie der Metallkomplexfarbstoffe übliche Substituenten tragen können, sowie durch Mischchromierung oder Mischkobaltierung der entsprechenden Ausgangsfarbstoffe erhältliche Gemische.

Geeignete Substituenten für A, B und C sind neben der Sulfogruppe beispielsweise Sulfamoyl, COOH, Carbamoyl, Acylamino, Alkylsulfonyl, Arylsulfonyl, Alkyl, Alkoxy, $NO_2$, $NH_2$, mono- oder dialkylsubstituiertes $NH_2$, OH, Cl, Br, CN, $CF_3$ oder Arylazo.

Bevorzugte Alkyl- und Alkoxygruppen sind solche mit 1 bis 4 C-Atomen, die gegebenenfalls weiter substituiert sein können, beispielsweise durch CN, Cl, OH, $C_1$-$C_4$-Alkoxy oder gegebenenfalls substituiertes Phenyl. Besonders bevorzugt sind Methyl oder Methoxy.

Bevorzugte Cycloalkylgruppen sind Cyclohexyl oder Methylcyclohexyl, und als Aralkylgruppen kommen vorzugsweise Benzyl oder Phenethyl in Frage.

Acylamino steht vorzugsweise für $C_1$-$C_4$-Alkylcarbonylamino, $C_1$-$C_4$-Alkoxycarbonylamino, $C_1$-$C_4$-Alkylsulfonylamino, Arylcarbonylamino oder Arylsulfonylamino.

Die Sulfamoyl- oder Carbamoylgruppen können mono- oder disubstituiert sein beispielsweise durch gegebenenfalls substituiertes $C_1$-$C_4$-Alkyl oder durch Aryl.

Bevorzugte Arylreste sind insbesondere gegebenenfalls substituierte Phenylreste mit Substituenten wie

Cl, $NO_2$, $C_1$-$C_4$-Alkyl, $C_1$-$C_4$-Alkoxy oder $SO_3H$.

Der Rest C leitet sich, falls Q für Stickstoff steht, vorzugsweise von Resorcin, m-Phenylendiamin, m-Aminophenol, N-mono- oder -dialkalsubstituierten m-Aminophenolen, von in o-Stellung kuppelnden Phenolen oder von Kupplungskomponenten der 1-Naphthol-, 2-Naphthol-, 1-Naphthylamin-, 2-Naphthylamin-, 5-Pyrazolon-, 5-Aminopyrazol-, Acetessigsäureamid-, Acetonylbenzthiazol-, 6-Hydroxypyridon- oder 4-Hydroxychinolin-Reihe ab.

Das durch $Ka^{(+)}$ dargestellte Kation ist vorzugsweise ein Alkaliion, insbesondere ein Lithium-, Narium- oder Kaliumkation, ein Ammoniumion oder das Kation eines organischen Amins.

Bevorzugte Farbstoffe sind solche der Formeln

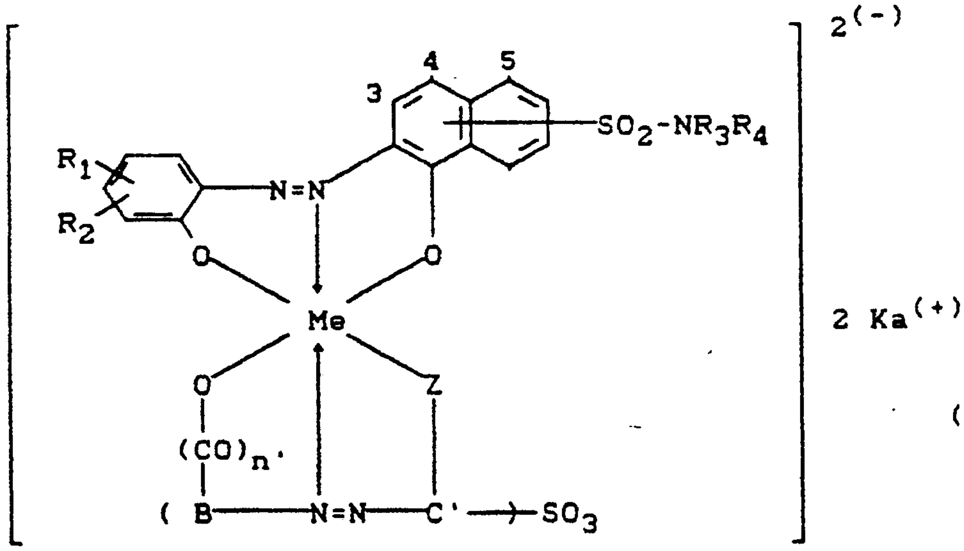

(II),

und

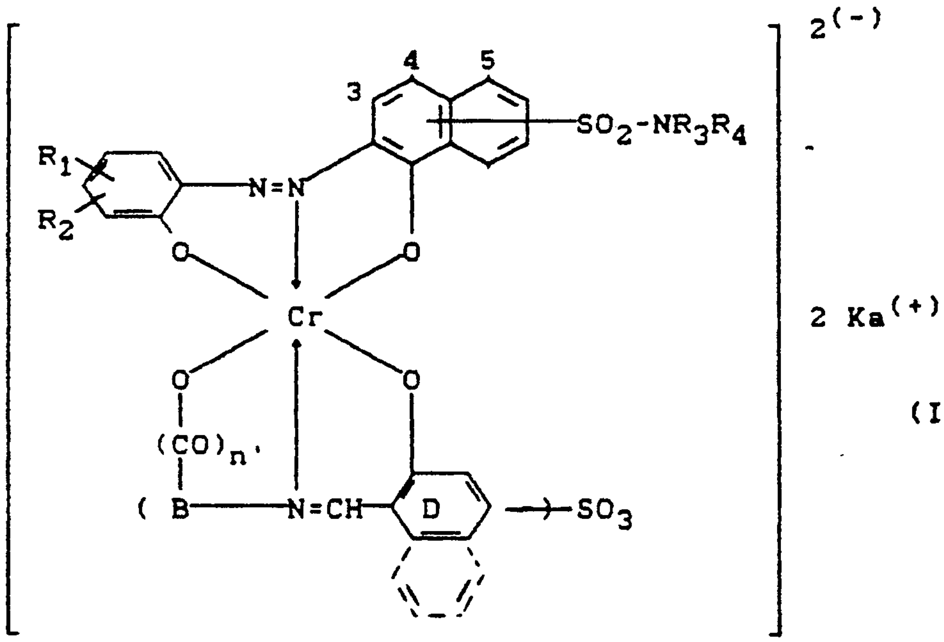

(III),

worin

$SO_2$-$NR_3R_4$ in 3-, 4- oder 5-Stellung steht,

die Symbole Me, B, Z, $Ka^{(+)}$ und n' die obengenannte Bedeutung haben,

$R_1$, $R_2$ unabhängig voneinander für H, Cl, $NO_2$, $CH_3$ oder $OCH_3$,

$R_3$ für H oder Alkyl,

$R_4$ für H, Alkyl oder Aryl und

C' für den Rest eines gegebenenfalls substituierten Naphthalins, Pyrazols oder Acetessigsäureamids stehen

und

Ring D außer der Sulfogruppe noch durch Alkyl, Cl, Br oder Arylazo substituiert sein kann.

Besonders bevorzugt sind die Farbstoffe der Formeln

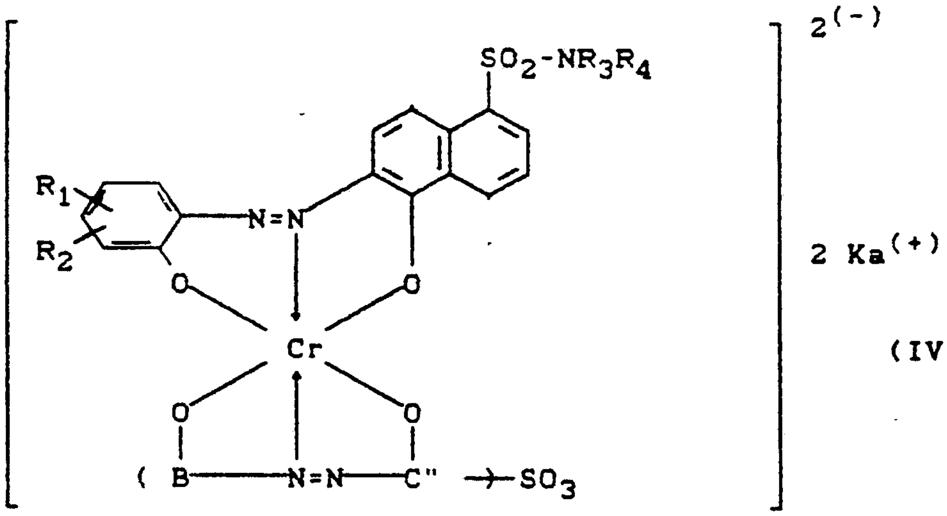

(IV),

und

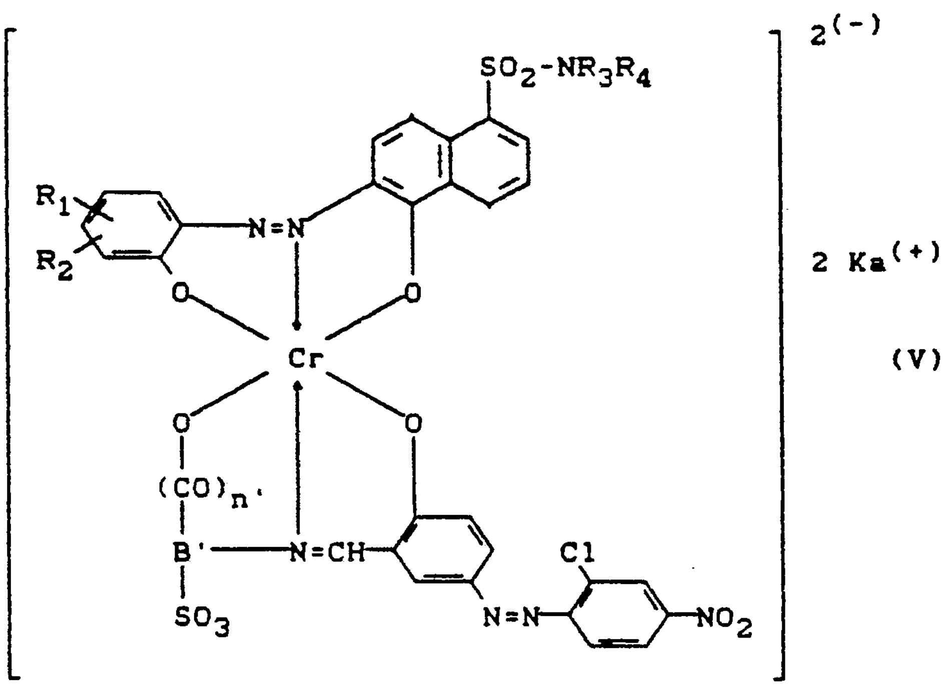

(V),

worin

die Symbole $R_1$, $R_2$, $R_3$, $R_4$, B, $Ka^{(+)}$ und n die obengenannte Bedeutung haben und

C" für den Rest eines gegebenenfalls durch $SO_3H$, $CH_3$, Cl oder den zweiertigen Rest $O\text{-}CH_2\text{-}SO_2$

substituierten 1-Naphthols oder für den Rest eines gegebenenfalls durch $SO_3H$, Acetylamino oder Methylsulfonylamino substituierten 2-Naphthols und

B′ sofern n gleich null, für den Rest eines sulfogruppenhaltigen o-Aminophenols, welches noch durch Cl oder $NO_2$ substituiert sein kann, oder, sofern n gleich 1, für den Rest einer sulfogruppenhaltigen Anthranilsäure stehen kann.

Die erfindungsgemäßen 1:2-Chromkomplexfarbstoffe werden in an sich bekannter Weise (vgl. z.B. DE-A 27 35 287 und US-A 29 85 646) erhalten, indem man einen Farbstoff der Formel

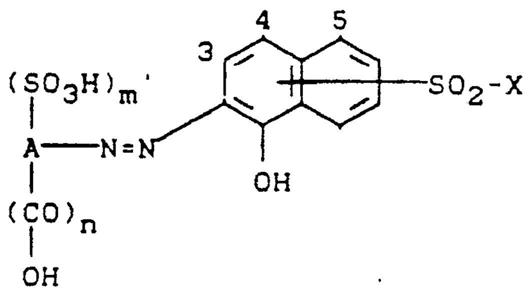

(VI),

oder

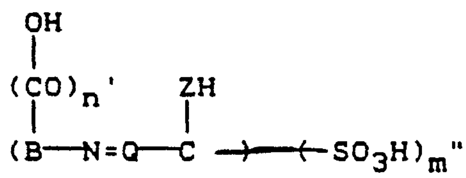

(VII),

worin

m′ 0 oder 1 und

m″ 1 oder 2 bedeuten,

mit einem chromabgebenden Mittel in den 1:1 Chromkomplex überführt und diesen mit dem entsprechenden nichtmemetallisierten Farbstoff der Formel (VII) bzw. (VI) umsetzt.

Wegen ihrer leichten Zugänglichkeit können anstelle der Azomethine der Formel

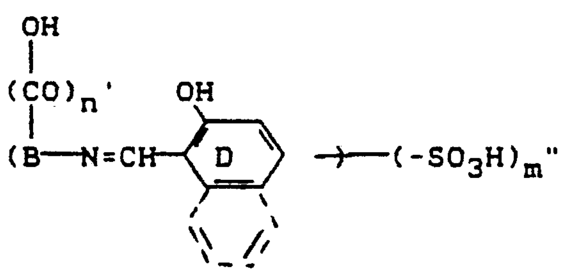

(VIII),

auch Gemische aus Aminen der Formel

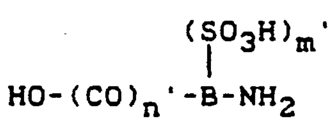

(IX),

mit den Aldehyden der Formel

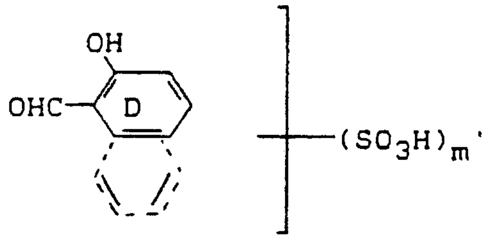

(X),

eingesetzt werden.

Auf ähnliche Weise gelangt man zu den erfindungsgemäßen 1:2-Kobaltkomplexfarbstoffen, indem man beispielsweise entsprechend der DE-OS 21 53 549 mit Nitritionen stabilisierte 1:1-Kobaltkomplexe der Farbstoffe der Formel (VI) oder (VII) an einen nichtmetallisierten Farbstoff der Formel (VII) oder (VI) anlagert.

Ein bevorzugtes Herstellungsverfahren für die erfindungsgemäßen 1:2-Kobaltkomplexfarbstoffe bestehen darin, Gemische von Farbstoffen der Formeln (VI) und (VII) nach bekannten Verfahren (vgl. EP 55 808 und DE-OS 29 18 633) mit kobaltabgebenden Mitteln zu behandeln, ein Verfahren, bei dem neben den asymmetrischen Komplexen der Formel (I) (Me = Co) auch die symmetrischen 1:2-Kobaltkomplexe der Farbstoffe der Formel (VI) und (VII) entstehen. Das Verhältnis der beiden Farbstoffe der Formel (VI) und (VII) braucht bei diesem Vorgehen nicht stöchiometrisch zu sein, sondern kann in weiten Grenzen schwanken, beispielsweise von 70:30 bis 30:70, vorzugsweise in den Grenzen von 60:40 bis 40:60.

Nach dem gleichen Prinzip lassen sich Gemische von asymmetrischen 1:2-Chromkomplexen der Formel (I) (Me = Cr) und den entsprechenden symmetrischen 1:2-Chromkomplexen der Farbstoffe der Formel (VI) und (VII) herstellen, wenn man Gemische dieser Farbstoffe in dem obengenannten Verhältnis nach ebenfalls bekannten Verfahren (vgl. DE-OS 26 04 799 und DE-OS 30 23 664) mit chromabgebenden Mitteln behandelt.

Gegenstand der Erfindung sind demzufolge auch die durch Mischchromierung oder Mischkobaltierung von (VI) und (VII) erhältlichen Farbstoffgemische.

Bevorzugte durch Mischchromierung erhältliche Gemische, die ebenfalls Gegenstand der Erfindung sind, enthalten die Farbstoffe (IV) sowie (XI) und (XII):

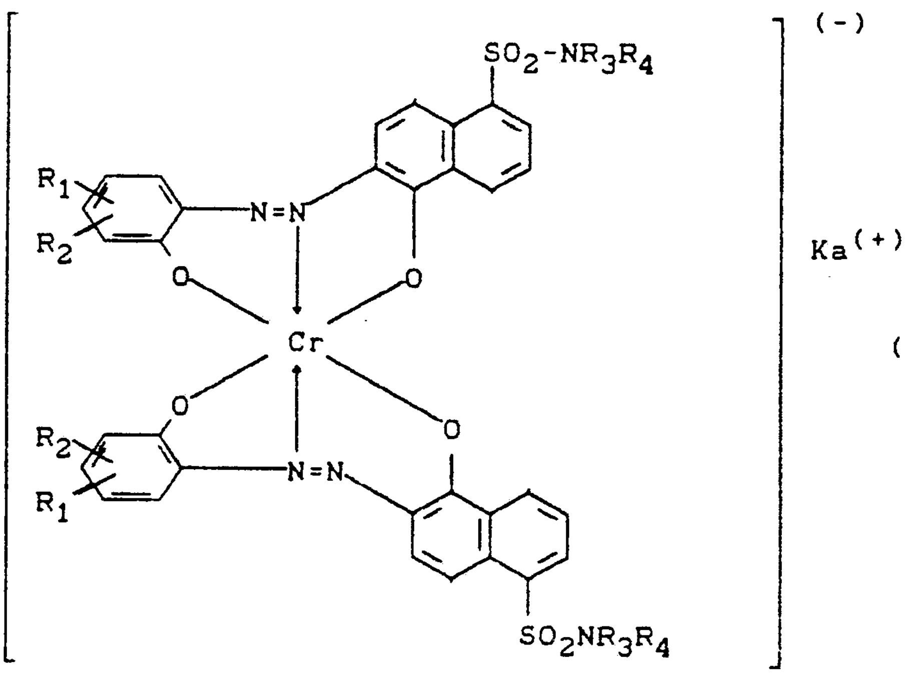

(XI),

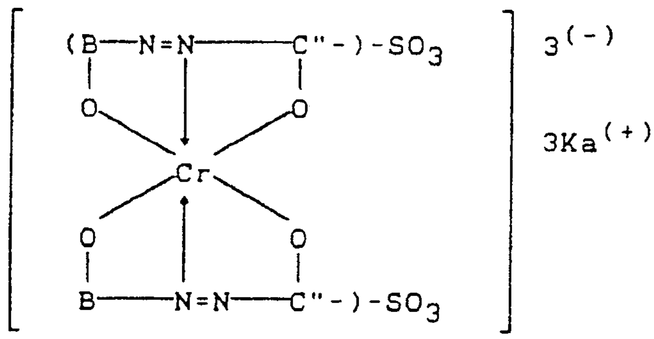

(XII).

Die Azofarbstoffe der Formel (VI) werden in bekannter Weise durch Kuppeln von diazotierten Aminen der Formel (XIII) auf die 1-Naphthole der Formel (XIV) erhalten, diejenigen der Formel (VII) (Q = N) durch Kuppeln von diazotierten Aminen der Formel (XV) auf die Kupplungskomponenten der Formel (XVI).

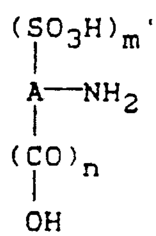

(XIII)

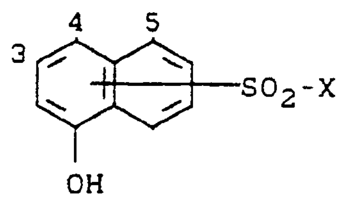

(XIV)

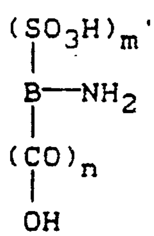

(XV)

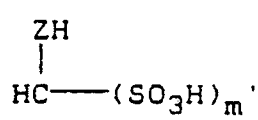

(XVI).

Die 1-Naphthole der Formel (XIV) sind zum Teil bekannt (vgl. DRP 745 334 und DE-AS 10 01 483) und auf dem üblichen Weg zugänglich. Zur Herstellung werden die 1-Naphthol-3-, -4- und -5-sulfonsäure beispielsweise mit Benzolsulfochlorid verestert und anschließend beispielsweise mit $POCL_3/PCl_5$ in das 3-, 4- und 5-Sulfochlorid überführt. Die Umsetzung der Sulfochloride mit den Aminen $HNR_3R_4$ und die nachfolgende alkalische Verseifung führen zu den entsprechenden Naphtholsulfonamiden, die Reduktion der Sulfochloride zu den Sulfinsäuren, die nachfolgende Behandlung mit Alkylierungsmitteln, beispielsweise mit Dimethylsulfat, Diethylsulfat, Ethylenoxid, und wiederum die alkalische Verseifung zu den entsprechenden Alkylsulfonylnaphtholen.

Geeignete Diazoverbindungen der Formel (XIII) und (XV) sind beispielsweise:
2-Aminobenzoesäure,
2-Aminobenzoesäure-4- oder -5-sulfonsäure,
2-Aminobenzoesäure-4- oder -5-sulfonamid,
4-, 5- oder 6-Chlor-2-aminobenzoesäure,
4- oder 5-Nitro-2-aminobenzoesäure,
2-Amino-1-hydroxybenzol,
4- oder 5-Chlor-2-amino-1-hydroxybenzol,

4,6-Dichlor-2-amino-1-hydroxybenzol,
4- oder 5-Nitro-2-amino-1-hydroxybenzol,
4,6-Dinitro-2-amino-1-hydroxybenzol,
4-Chlor-, 4-Methyl- oder 4-Acetamino-6-nitro-2-amino-1-hydroxybenzol,
6-Methyl-, 6-Acetamino- oder 6-Chlor-4-nitro-2-amino-1-hydroxybenzol,
6-Acetamino-4-chlor-2-amino-1-hydroxybenzol,
4-Chlor-5-nitro-2-amino-1-hydroxybenzol,
4- oder 5-Methyl-2-amino-1-hydroxybenzol,
4-Methoxy-2-amino-1-hydroxybenzol,
2-Amino-1-hydroxybenzol-4- oder -5-methylsulfon,
2-Amino-1-hydroxybenzol-4- oder -5-phenylsulfon,
2-Amino-1-hydroxybenzol-4- oder -5-sulfonamid,
2-Amino-1-hydroxybenzol-4- oder -5-sulfanilid,
4-Nitro-2-amino-1-hydroxybenzol-5-oder -6-sulfonamid,
2-Amino-1-hydroxybenzol-4- oder -5-sulfonsäure,
4-Nitro-2-amino-1-hydroxybenzol-5- oder -6-sulfonsäure,
5-Nitro- oder 6-Nitro-2-amino-1-hydroxybenzol-4-sulfonsäure,
6-Chlor-2-amino-1-hydroxybenzol-4-sulfonsäure,
4-Chlor-2-amino-1-hydroxybenzol-6-sulfonsäure,
4-Methyl-2-amino-1-hydroxybenzol-5- oder -6-sulfonsäure,
1-Amino-2-hydroxynaphthalin-4-sulfonsäure,
6-Nitro-1-amino-2-hydroxynaphthalin-4-sulfonsäure.

Beispiele von 1-Naphtholen der Formel (XIV) sind 1-Naphthol-3-, -4- und -5-sulfonamid, -methylsulfonamid, -ethylsulfonamid, -propylsulfonamid, -butylsulfonamid, -isopropylsulfonamid, -(2-hydroxyethyl)-sulfonamid, -phenylsulfonamid, -N-methyl-N-phenylsulfonamid, -dimethylsulfonamid, -diethylsulfonamid, -bis(2-hydroxyethyl)-sulfonamid, -methylsulfonyl, -ethylsulfonyl, -propylsulfonyl, -butylsulfonyl und -(2-hydroxyethyl)-sulfonyl.

Als Kupplungskomponenten der Formel (XVI) kommen beispielsweise in Betracht:
2-Naphthol, 1,3- oder 1,5-Dihydroxynaphthalin, 6-Brom-oder 6-Methoxy-2-naphthol, 2-Naphthol-3-, -4-, -5-, -6-, -7- oder -8-sulfonsäure, 4-Acetyl- oder 6-Acetyl-2-naphthol, 1-Acetylamino-, 1-Propionylamino- 1-Benzoylamino-, 1-Carbomethoxyamino-, 1-Carboethoxyamino- oder 1-Methylsulfonylamino-7-naphthol, 2-Naphthol-3,6-disulfonsäure, 2-Naphthol-5,7-disulfonsäure, 1-Naphthol, 1-Naphthol-3-, -4-, -5-, -6-, -7- oder 8-sulfonsäure, 5,8-Dichlor-1-naphthol, 5-Chlor-1-naphthol, 8-Acetamino-1-naphthol-4-sulfonsäure, 2-Phenylamino- oder 2-(4-Methoxyphenylamino)-5-naphthol-7-sulfonsäure,2-Amino-8-naphthol-6-sulfonsäure, 4-Methyl-1-naphthol, 4′-Hydroxynaphtho-(2′,1′:4,5)oxathiazol-S-dioxid, 2-Napthylamin, 2-Naphthylamin-1-, -5-, -6- oder -7-sulfonsäure, 1-Naphthylamin-4- oder -5-sulfonsäure, 1-Phenyl-3-methyl-5-pyrazolon, 1,3-Diphenyl-5-pyrazolon, 3-Methyl-5-pyrazolon, 1,3-Dimethyl-5-pyrazolon, 1-Ethyl-3-methyl-5-pyrazolon, 1-(2-Hydroxyethyl)-3-methyl-5-pyrazolon, 1-(2-, 3- oder 4-Chlorphenyl)-3-methyl-5-pyrazolon, 1-(2-, 3- oder 4-Methylphenyl)-3-methyl-5-pyrazolon, 1-(2-, 3-oder 4-Methoxyphenyl)-3-methyl-5-pyrazolon, 1-(2-Ethylphenyl)-3-methyl-5-pyrazolon, 1-(2,5-Dichlorphenyl)-3-methyl-5-pyrazolon, 1-(2-Methoxy-5-methylphenyl)-3-methyl-5-pyrazolon, 1-Naphthyl-(1′)-3-methyl-5-pyrazolon, 1-Naphthyl-(2′)-3-methyl-5-pyrazolon, 1-(2-, 3- oder 4-Sulfophenyl)-3-methyl-5-pyrazolon, 1-(Phenyl-2-, -3- oder -4-sulfonamid)-3-methyl-5-pyrazolon, 1-(Phenyl-2-, -3- oder -4-carbonsäure)-3-methyl-5-pyrazolon, 1-(2-Chlor-4- oder -5-sulfophenyl)-3-methyl-5-pyrazolon, 1-(4-, 5-, 6-, 7-oder 8-Sulfonaphthyl-(1′))-3-methyl-5-pyrazolon, 1-(1-, 5-, 6-, 7- oder 8-Sulfonaphthyl-(2′))-3-methyl-5-pyrazolon, 1-Phenyl-3-methyl-5-aminopyrazol, 1-Phenyl-5-aminopyrazol, 1-(2-, 3- oder 4-Sulfophenyl)-3-Methyl-5-aminopyrazol, 1-(2-Chlor-5-sulfophenyl)-3-methyl-5-aminopyrazol, Acetessigsäureanilid, Acetessigsäure(2-, 3- oder 4-sulfoanilid), Acetessigsäure(2-chlor-, 2-methyl- oder 2-methoxyanilid), 4-Methyl-, 4-Ethyl-, 4-Butyl-, 4-Amyl-oder 4-tert.-Amylphenol, 2,4-oder 3,4-Dimethylphenol, 2- oder 3-Acetamino-4-methylphenol, Resorcin, 3-Amino-, 3-Dimethylamino- oder 3-Diethylaminophenol, 1-Methyl- oder 1-Ethyl-3-cyano-4-methyl-6-hydroxypyridon, 1-Methyl- oder 1-Ethyl-3-carbonamido-4-methyl-6-hyroxypyridon, 4-Hydroxy-2-chinolon, 1-Methyl-4-hydroxy-2-chinolon oder 2-Acetonylbenzthiazol.

Beispiele für Aldehyde der Formel (X) sind 2-Hydroxy-1-naphthaldehyd, 1-Hydroxy-2-naphthaldehyd, 2-Hydroxybenzaldehyd, 3- oder 5-Methyl-2-hydroxybenzaldehyd, 3,5-Dimethyl-2-hydroxybenzaldehyd,5-Chlor-, 5-Brom- oder 5-Sulfo-2-hydroxybenzaldehyd, 3,5-Dichlor-2-hydroxybenzaldehyd, 3-Methyl-5-chlor-2-hydroxybenzaldehyd, 5-Phenylazo-2-hydroxybenzaldehyd, 5-(2-Chlor-4-nitrophenylazo)-2-hydroxybenzaldehyd, 5-(2,5-Dichlorphenylazo)-2-hydroxybenzaldehyd und 5-(5- oder 6-Sulfonaphthyl-(1′)-azo)-2-hydroxybenzaldehyd.

Die Überführung der Farbstoffe der Formel (VI) oder (VII) in den Chrom-1:1-Komplex erfolgt nach

üblichen, an sich bekannten Methoden, indem man z.B. den metallfreien Farbstoff mit einem Salz des dreiwertigen Chroms, wie Chromfluorid, Chromchlorid, Chromsulfat oder Chromformiat in wäßrigem Medium bei Siedetemperatur oder gegegebenenfalls hoherer Temperatur umsetzt.

Die Umsetzung eines Chrom-1:1-Komplexes der Farbstoffe der Formel (VI) oder (VII) mit einem metallfreien Farbstoff der Formel (VII) bzw. (VI) erfolgt zweckmäßig in alkalischem bis schwach saurem Medium bei gewöhnlicher oder erhöhter Temperatur, vorzugsweise im Bereich von 50 - 100 °C. Die Reaktionspartner werden vorzugsweise in stöchiometrischen Mengen eingesetzt; ein Überschuß an metallhaltigem Farbstoff wirkt sich im allgemeinen weniger nachteilig aus als ein Überschuß an metallfreiem Farbstoff. Die bei der Anlagerung des metallfreien Farbstoffes and den Chrom-1:1-Komplex freiwerdende Säure wird durch Zusatz alkalisch wirkender Mittel abgefangen, beispielsweise durch Zusatz von Hydroxiden oder Carbonaten von Alkalimetallen, wie Lithium-, Natrium-, Kaliumhydroxid oder -carbonat, von Ammoniak oder organischen Aminen, wie Mono-, Di-, Triethylamin, Mono-, Di- oder Triethanolamin, oder von Tetraalkylammoniumhydroxiden, wie Tetramethylammoniumhydroxid. Vorzugsweise setzt man die alkalisch wirkenden Mittel so zu, daß die Reaktion bei einem konstanten pH-Wert abläuft.

Alkalisch wirkende Mittel werden auch bei der Mischkobaltierung und -chromierung benötigt, bei der Art von Metallisierung, bei der Gemische von je einem Farbstoff der Formel (VI) und (VII) mit metallabgebenden Mitteln behandelt werden. Die Mischkobaltierung erfolgt bei Temperaturen von 20 - 100 °C, vorzugsweise bei 40 - 80 °C, und bei pH 7 - 12, vorzugsweise 10 - 12, die Mischchromierung bei Temperaturen von 80 - 145 °C, vorzugsweise bei 100 °C, und bei pH 4 - 10, vorzugsweise 6 - 8. Als metallabgebende Mittel kommen hauptsächlich die Kobalt-und Chromsalze von anorganischen oder organischen Säuren in Frage, beispielsweise Kobaltcarbonat, -chlorid, -sulfat, -acetat oder -formiat und Chromchlorid, -sulfat, -acetat, Kalium- oder Ammoniumchromsulfat, Chromsalicylsäure, ferner Chromtrioxid und Natrium- oder Kaliumchromat bzw. -bichromat.

Die hier beschriebenen Umsetzungen zu den 1:1-Chrom-, 1:2-Kobalt- und 1:2-Chromkomplexfarbstoffen können zur Beschleunigung der Reaktion auch in Gegenwart organischer Lösungsmittel durchgeführt werden. Geeignete organische Lösungsmittel sind beispielsweise niedere Alkohole, wie Ethanol, Ketone, wie Ethylmethylketon, Carbonamide, wie Formamid, Dimethylformamid, N-Methylpyrrolidon, Glykole, wie Ethylenglykol, 1,2-Propylenglykol oder vorzugsweise deren Mono-$C_1$-$C_4$-alkylether, wie Ethylglykol, 1-Ethoxy-2-propanol.

Am Ende der Reaktion liegen die erfindungsgemäßen 1:2-Metallkomplexfarbstoffe der Formel (I) - gegebenenfalls in Begleitung ihrer symmetrischen 1:2-Metallkomplexfarbstoffe - als Salz der Komplexsäure und der an ihr gebundenen $SO_3H$-Gruppen mit den oben erwähnten alkalisch wirkenden Mittel vor, beispielsweise als Alkalisalze bei Verwendung von Alkalihydroxiden oder -carbonaten oder als Ammoniumsalze bei Verwendung von Ammoniak, Aminen oder Tetraalkylammoniumhydroxiden. Zur Neutralisation können auch Amine Verwendung finden, die mit 1:2-Chromkomplexfarbstoffen in Wasser schwer lösliche Salze bilden, so daß sie nur unter Zusatz von organischen Lösungsmitteln oder in diesen Lösungsmitteln allein gelöst werden können. Derartige Amine sind beispielsweise N-Ethyl-N-hexylamin, Dodecylamin, Oleylamin, Cyclohexylamin, N,N-Dicyclohexylamin, N,N'-Diphenylguanidin oder N,N'-Ditolylguanidin.

Die so hergestellten 1:2-Metallkomplexfarbstoffe können durch Aussalzen mit Alkalisalzen, Eindampfen auf der Walze oder Sprühtrocknung isoliert und mit den üblichen Hilfs- und Stellmitteln zu wasserlöslichen Präparationen verarbeitet werden.

Die Zubereitung zu flüssigen Präparationen unter Verwendung von organischen Lösungsmitteln, gegebenenfalls im Gemisch mit Wasser und gegebenenfalls unter Zusatz von Lösungsvermittlern, wie beispielsweise Harnstoff, ist ebenfalls möglich und insofern empfehlenswert, als man die Synthese der 1:2-Metallkomplexfarbstoffe oder zumindest den letzten Schritt dieser Synthese und die Herstellung der Farbstofflösungen in einem Topf ohne Zwischenisolierung vollziehen kann. Besonders vorteilhaft ist das Verfahren der DE-OS 24 43 483, bei dem man u.a. den metallfreien Farbstoff in Hydroxylgruppenhaltigen Lösungsmitteln in Gegenwart von alkalisch wirkenden Lithiumsalzen an den metallhaltigen Farbstoff anlagert und dabei gleichzeitig lagerstabile konzentrierte Farbstofflösungen erhält.

Die 1:2-Metallkomplexfarbstoffe der Formel (I), die aufgrund ihrer Kationen in Wasser schwer und in organischen Lösungsmitteln gut löslich sind, können zum Färben von organischen Flüssigkeiten, Harzen oder Lacken, von Holzbeizen oder Kugelschreibertinten verwendet werden.

Die 1:2-Metallkomplexfarbstoffe der Formel (I), gegebenenfalls begleitet von den entsprechenden beiden symmetrischen 1:2-Metallkomplexfarbstoffen, die aufgrund ihrer Kationen gut wasserlöslich sind, eignen sich zum Färben und Bedrucken der verschiedensten Stoffe, vor allem zum Färben von natürlich und synthetischen amidgruppenhaltigen Materialien, wie Wolle, Seide, Leder, Polyamid- und Polyurethanfaser. Vor allem eignen sie sich zum Färben aus schwach alkalischem bis schwach sauren, z.B. essigsaurem Bad, wo sie gleichmäßig aufziehen und licht- und gebrauchsechte Färbungen liefern.

Die Gemische aus den 1:2-Chromkomplexfarbstoffen der Formeln (IV), (XI) und (XII) lassen sich besonders vorteilhaft zum Färben und Imprägnieren von Leder verwenden. Auf Ledern unterschiedlicher Farbstoffaffinität, wie Chromleder, verschieden nachgegerbte Leder oder Veloursleder vom Rind oder Schwein, ziehen sie gut auf, weisen bei zunehmendem Farbstoffangebot ein gutes Aufbauvermögen auf und geben kräftige tiefblaue Färbungen, ohne daß es dabei zu unerwünschten Bronzierungseffekten kommt:

Die flüssigen Zubereitungen der erfindungsgemäßen Farbstoffe eignen sich sowohl zum Faßfärben als auch zum Sprühfärben und Imprägnieren von Leder. Beim Färben auf Durchlauf-Maschinen, beispielsweise vom Typ MULTIMA®, zeichnen sie sich durch eine gute Penetration und eine gute Bindung zum Substrat aus.

Aus Chemical Abstracts, Band 84, Nr. 16, 19. April 1976, Seite 77, Nr. 107058m ist die Herstellung bestimmter Kobaltkomplexe von Sulfamoyl-substituierten Azoverbindungen bekannt, die zum Färben von Polyamidfasern geeignet sind.

Beispiel 1

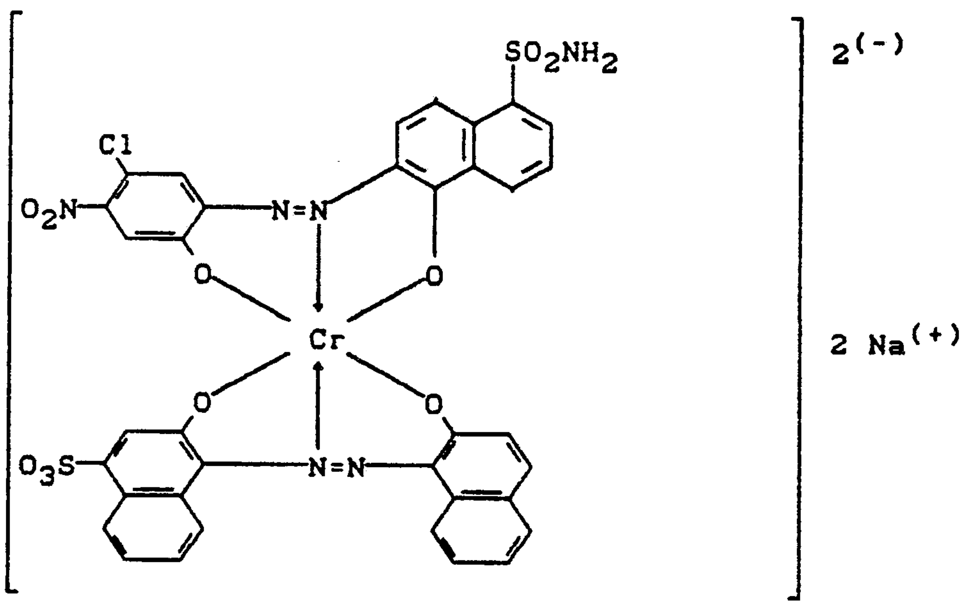

0,1 Mol Chrom-1:1-Komplex des Farbstoffes aus Diazaamidolsäure und 2-Naphthol und 0,1 Mol Farbstoff aus diazotiertem 4-Chlor-5-nitro-2-amino-1-hydroxybenzol und 1-Naphthol-5-sulfonamid werden in 800 ml Wasser angerührt. Die Suspension wird auf 80 °C erwärmt und auf dieser Temperatur gehalten, wobei durch Zutropfen von insgesamt 45 ml 5 n Natronlauge der pH im Bereich von 8,0 - 8,5 gehalten wird. Nach etwa 1-stündigem Rühren bei 80 °C braucht man keine Natronlauge mehr zuzusetzen und sind beide Ausgangsprodukte verschwunden. Es entsteht eine dunkelblaue Lösung, aus der sich der gebildete 1:2-Chrommischkomplex durch Zugabe von 90 g Natriumchlorid ausfällen läßt. Der filtrierte Niederschlag gibt beim Trocknen ein dunkles Pulver, welches Wolle, Polyamid und Leder in lichtechten blauen Tönen färbt.

Beispiel 2

Jeweils 0,1 Mol der beiden Kupplungsprodukte aus Diazamidolsäure und 2-Naphthol und aus diazotiertem 4-Chlor-5-nitro-2-amino-1-hydroxybenzol und 1-Naphthol-5-sulfonamid werden in 800 ml Wasser zusammen mit 73 g einer basischen Chromacetatlösung (10,5 Gew.-% $Cr_2O_3$) 2 bis 3 Stunden unter Rückfluß erhitzt, bis im Chromatogramm kein Ausgangsfarbstoff mehr nachzuweisen ist. Während des Kochens wird der pH durch Zutropfen von 25 - 30 ml 5 n Natronlauge im Bereich von 6 - 7 gehalten. Nach beendeter Chromierung wird die Farbstofflösung, welche die drei 1:2-Chromkomplexe der folgenden Formeln enthält, zur Trockne eingeengt.

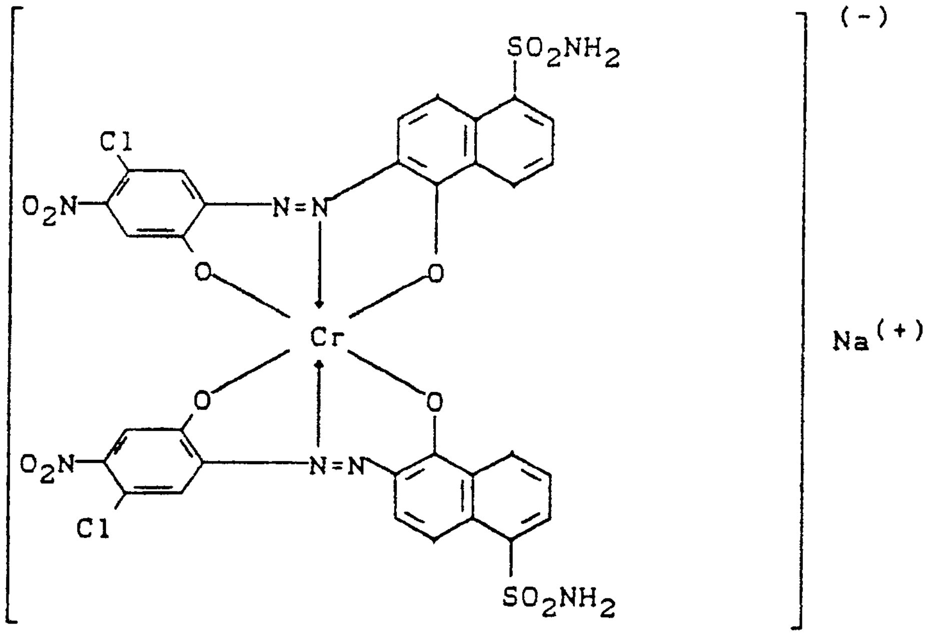

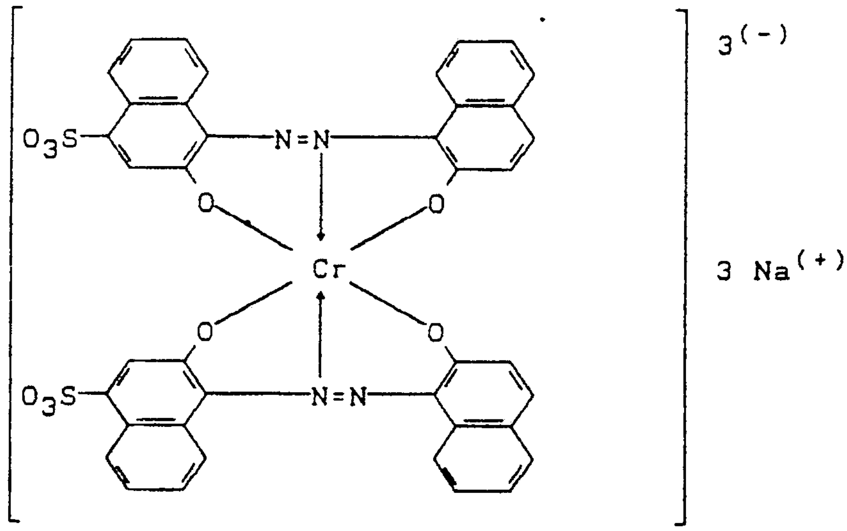

+

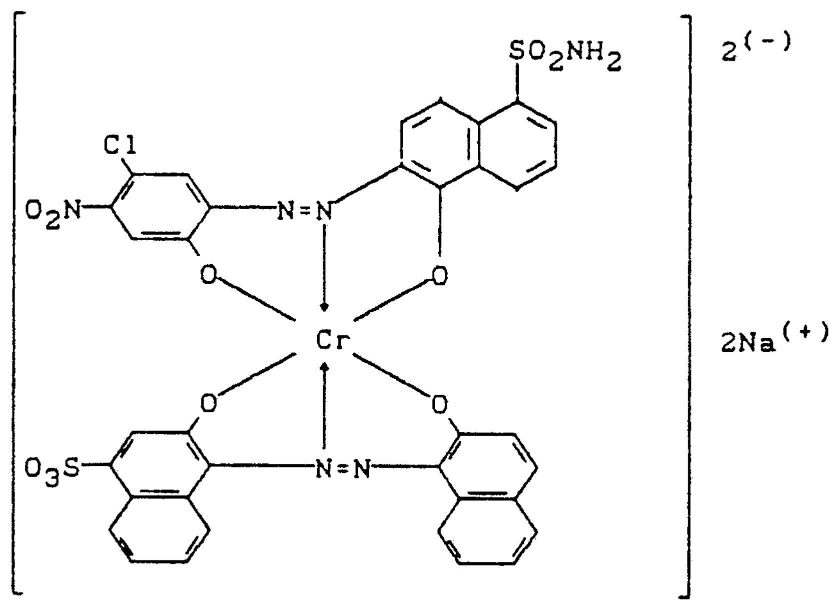

Das Gemisch der Chromkomplexe stellt nach dem Trocknen ein dunkles Pulver dar, mit dem man in der Nuance mit dem Farbstoff des Beispiels 1 vergleichbare tiefblaue Färbungen auf Leder erzielen kann.

Beispiel 3

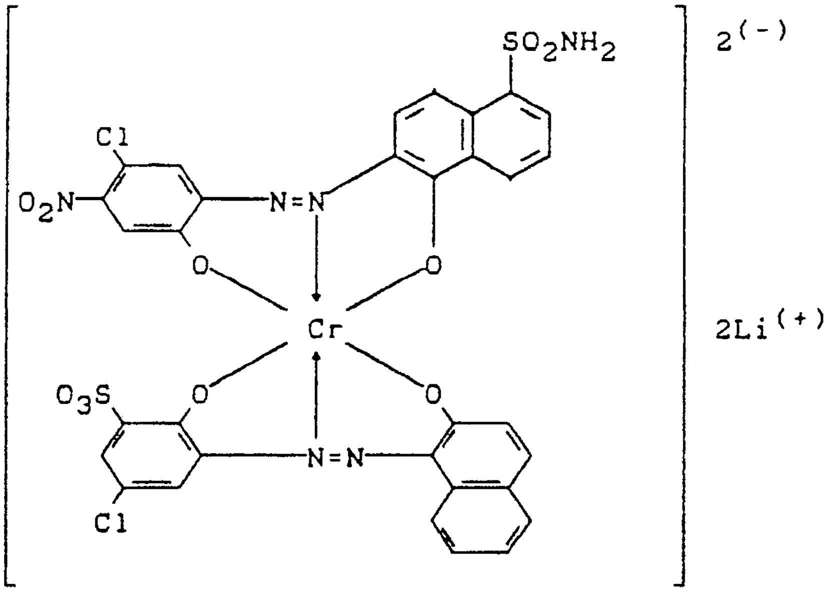

0,1 Mol Chrom-1:1-Komplex des Farbstoffes aus diazotierter 4-Chlor-2-amino-1-hydroxybenzol-6-sulfonsäure und 2-Naphthol und 0,1 Mol Farbstoff aus diazotiertem 4-Chlor-5-nitro-2-amino-1-hydroxybenzol und 1-Naphthol-5-sulfonamid werden jeweils als feuchte Paste in 400 ml 1-Ethoxy-2-propanol miteinander verrührt. Das Gemisch wird auf 80° C erwärmt und dabei durch gelegentliche Zugabe von insgesamt 9,5 g festem $LiOH \bullet H_2O$ bei pH 7 - 8 gehalten. Nach etwa einer halben Stunde hat sich der metallfreie Farbstoff vollständig an den Chrom-1:1-Komplex angelagert. Nach Abkühlen auf Raumtemperatur trennt man geringe Salzrückstände durch Filtration ab und erhält eine konzentrierte lagerstabile, dunkelblaue Lösung. Diese liefert im Faß, auf der MULTIMA® Färbemaschine oder beim Spritzen marineblaue Lederfärbungen mit guten Echtheiten.

Beispiel 4

Das Gemisch von 0,1 Mol Farbstoff aus diazotierter 4-Chlor-2-amino-1-hydroxybenzol-6-sulfonsäure und 2-Naphthol und 0,1 Mol Farbstoff aus diazotiertem 4-Chlor-5-nitro-2-amino-1-hydroxybenzol und 1-Naphthol-5-sulfonamid werden in 800 ml Wasser zusammen mit Natriumchromsalicylsäure-Lösung, hergestellt durch Erwärmen von 0,1 Mol Chromsulfatlauge mit 0,2 Mol Salicylsäure und nachfolgendem Alkalischstellen mit Natronlauge, unter Rückfluß gekocht. Nach etwa einer Stunde sind beide Ausgangsfarbstoffe vollständig chromiert. Die Lösung der entstandenen drei 1:2-Chromkomplexfarbstoffe wird durch Eindampfen von Wasser befreit. Man erhält ein blauschwarzes Pulver, welches gut aufbauende Lederfärbungen liefert mit ähnlichen Nuancen wie die Farbstofflösung des Beispiels 3.

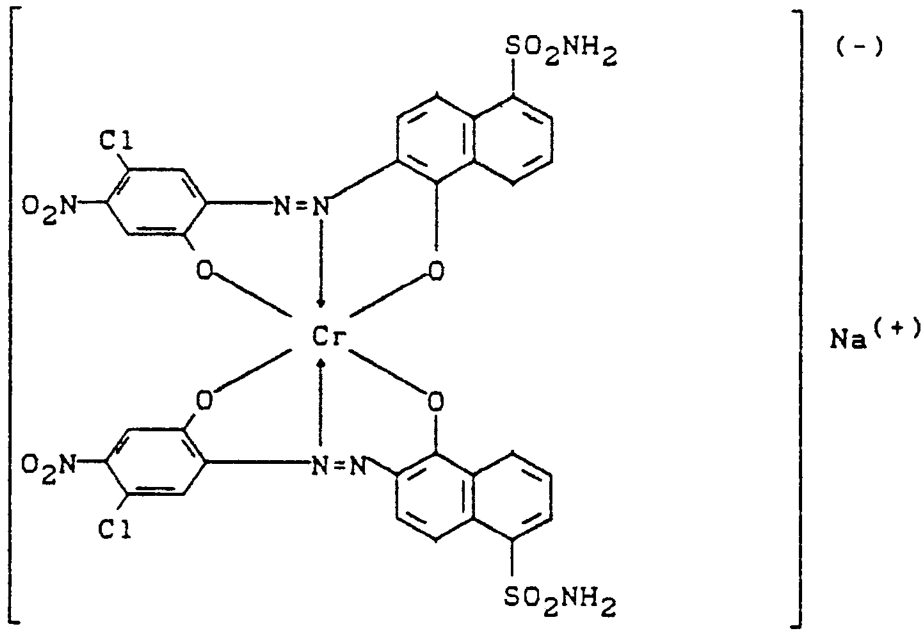

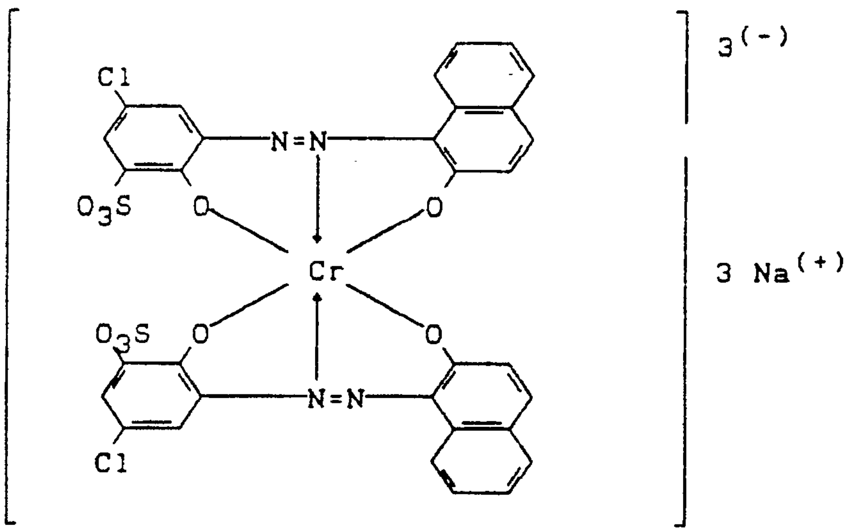

+

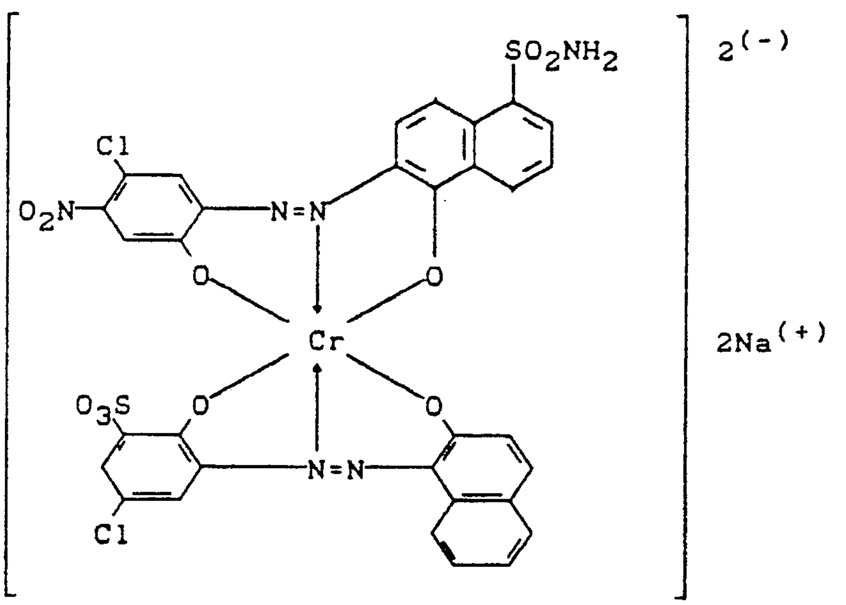

Beispiel 5 bis 31

Aus den in der folgenden Tabelle nebeneinander stehenden Farbstoffpaaren (1) und (2) erhält man weitere wertvolle 1:2-Chromkomplexfarbstoffe. Sie sind entweder nach den Angaben der Beispiele 1 und 3 jeweils über einen Chrom-1:1-Komplex oder nach Beispiel 2 und 4 durch Mischchromierung zugänglich. Vorzugsweise werden Chrom-1:1-Komplexe der sulfogruppenhaltigen Farbstoffe (1) eingesetzt.

Die so erhaltenen 1:2-Chromkomplexfarbstoffe geben auf Wolle, Polyamid und Leder marineblaue bis dunkelblaue Färbungen von guten Echtheiten.

**T a b e l l e**

| Nr. | Farbstoff (1) | Farbstoff (2) |
|---|---|---|
| 5 | 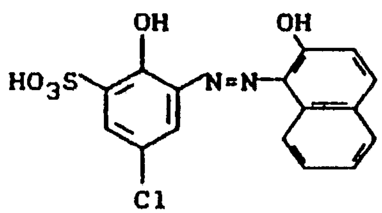 | 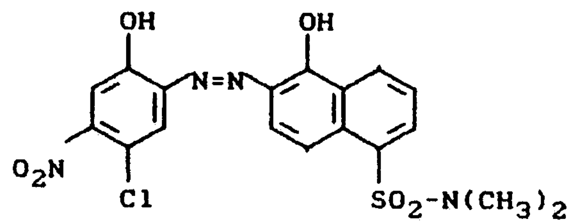 |
| 6 | 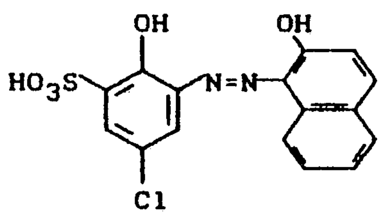 | 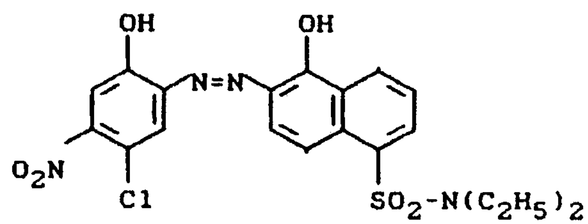 |
| 7 | 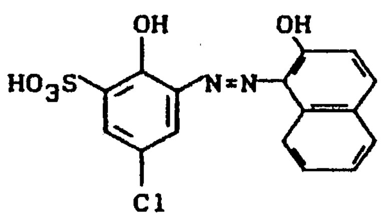 | 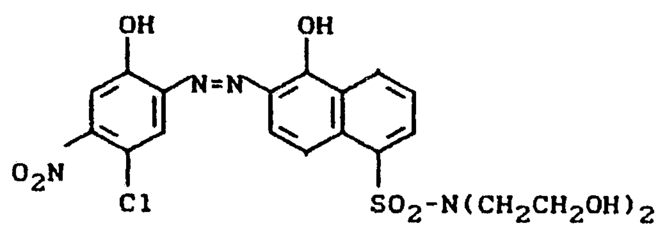 |

| Nr. | Farbstoff (1) | Farbstoff (2) |
|---|---|---|
| 8 | 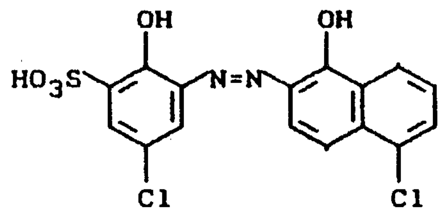 | 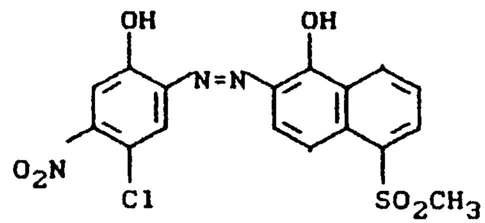 |
| 9 | 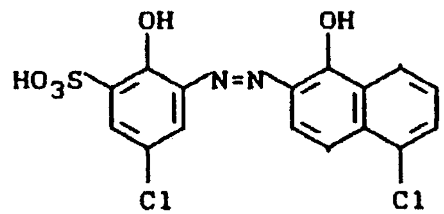 | 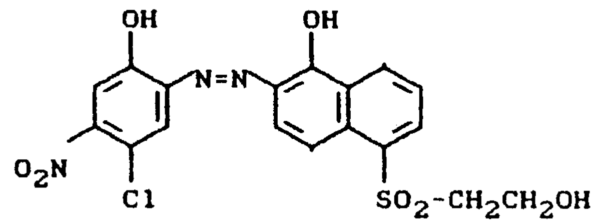 |
| 10 | 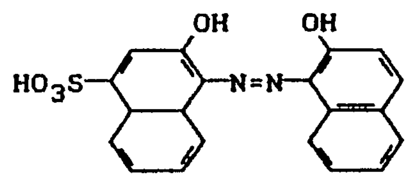 | 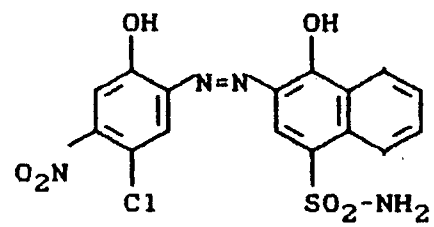 |

| Nr. | Farbstoff (1) | Farbstoff (2) |
|---|---|---|
| 11 | 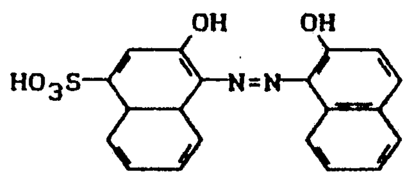 | 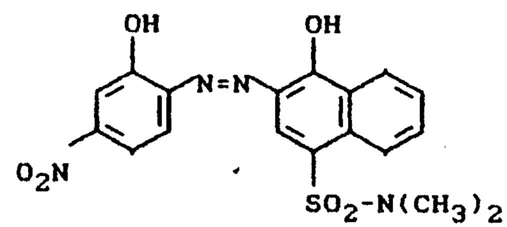 |
| 12 | 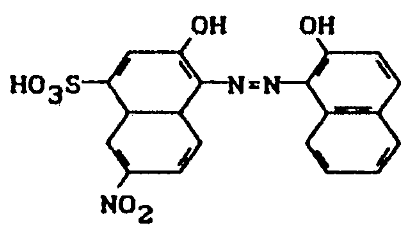 | 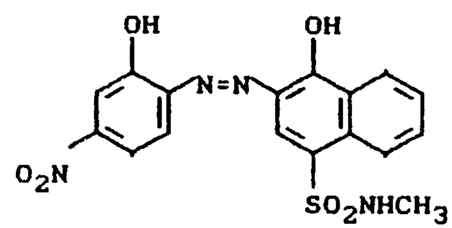 |
| 13 | 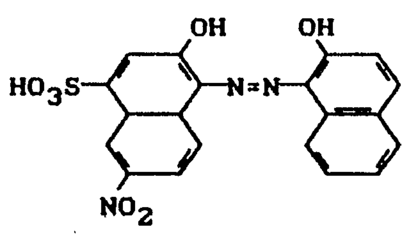 | 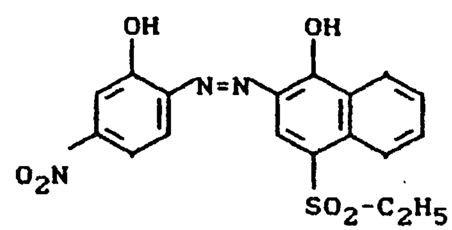 |

| Nr. | Farbstoff (1) | Farbstoff (2) |
|---|---|---|
| 14 | 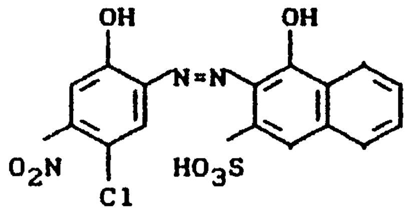 | 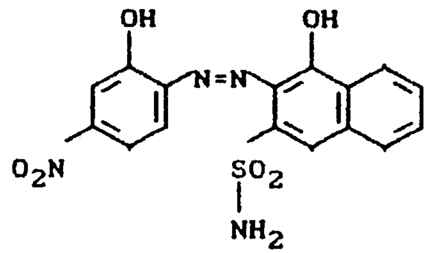 |
| 15 | 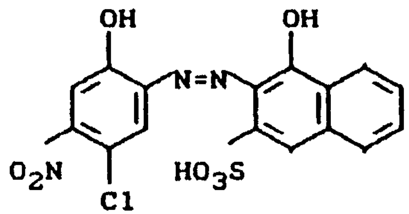 | 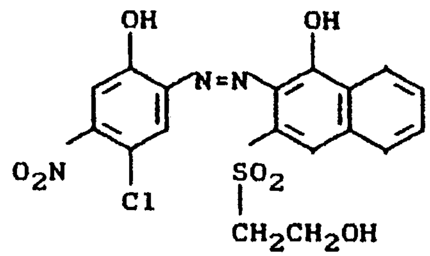 |
| 16 | 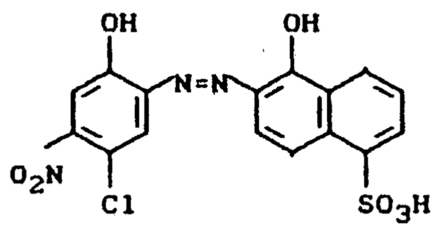 | 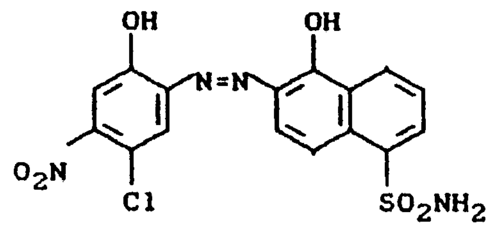 |

| Nr. | Farbstoff (1) | Farbstoff (2) |
| --- | --- | --- |
| 17 | 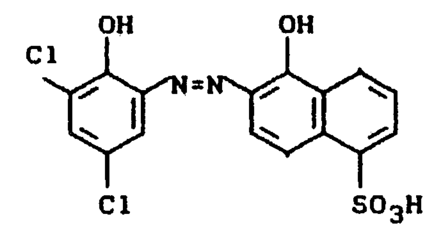 | 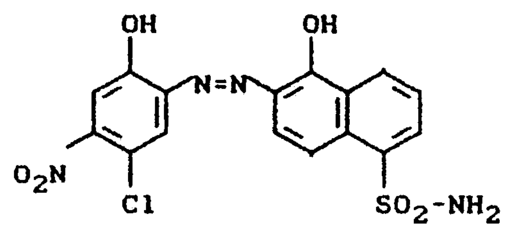 |
| 18 | 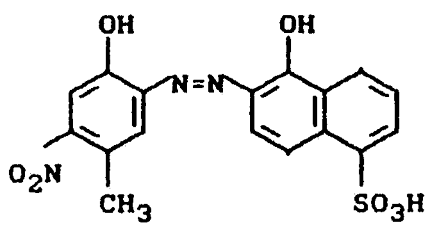 | 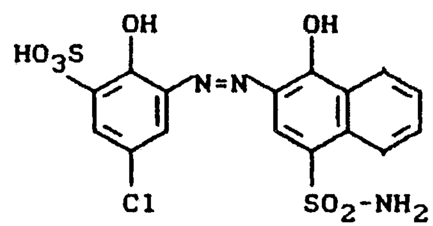 |
| 19 | 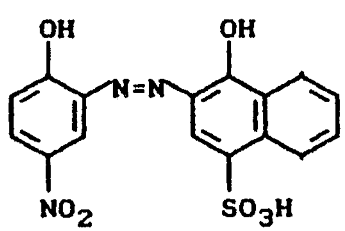 | 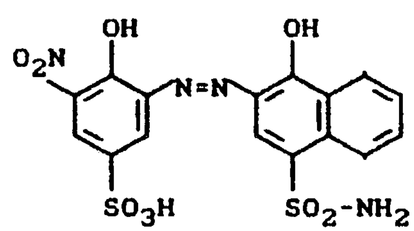 |

| Nr. | Farbstoff (1) | Farbstoff (2) |
| --- | --- | --- |
| 20 | 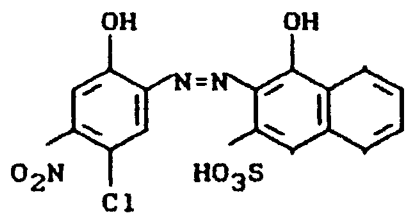 | 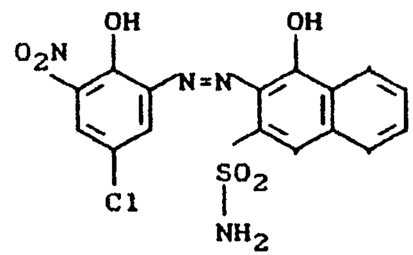 |
| 21 | 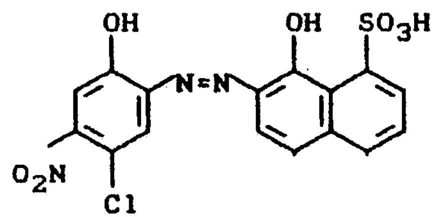 | 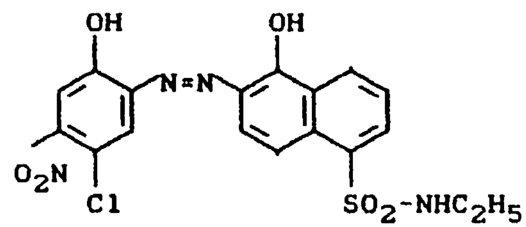 |
| 22 | 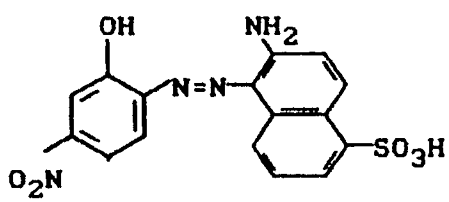 | 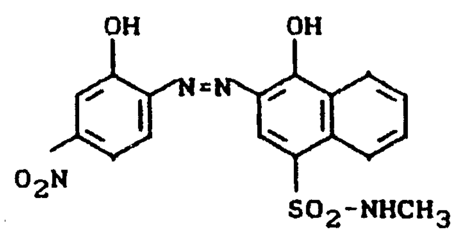 |

| Nr. | Farbstoff (1) | Farbstoff (2) |
|---|---|---|
| 23 | 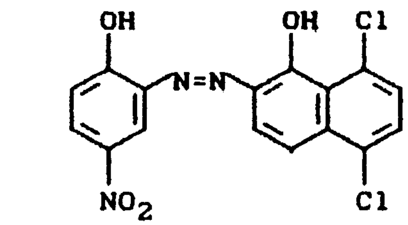 | 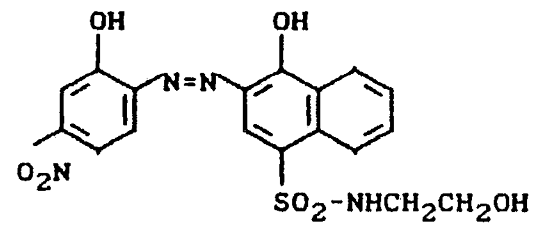 |
| 24 | 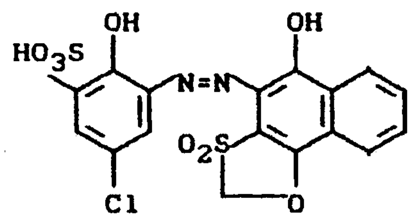 | 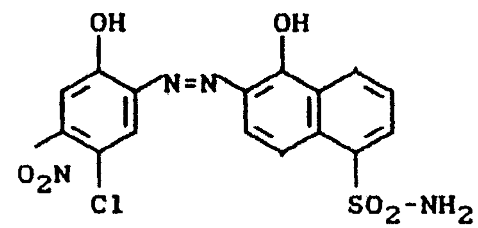 |
| 25 | 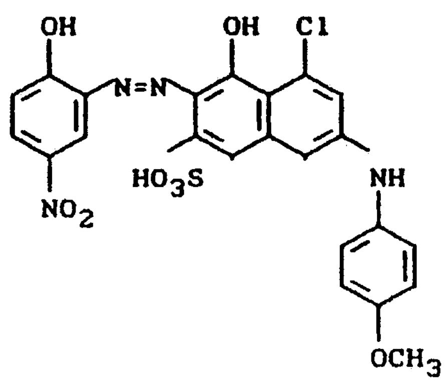 | 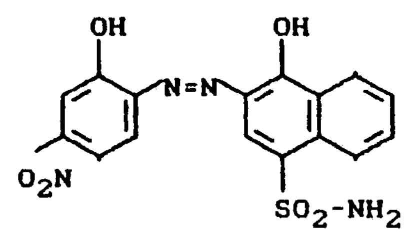 |

| Nr. | Farbstoff (1) | Farbstoff (2) |
| --- | --- | --- |
| 26 | 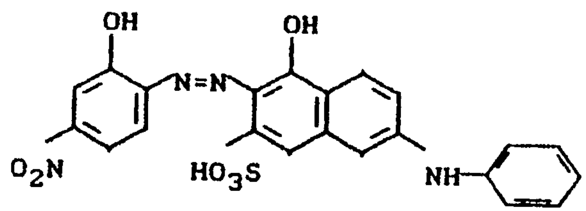 | 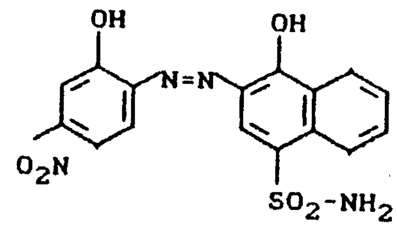 |
| 27 | 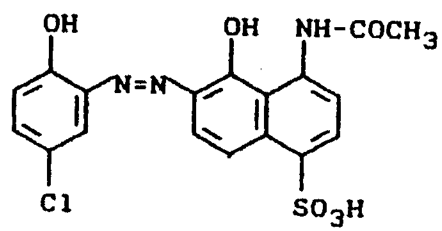 | 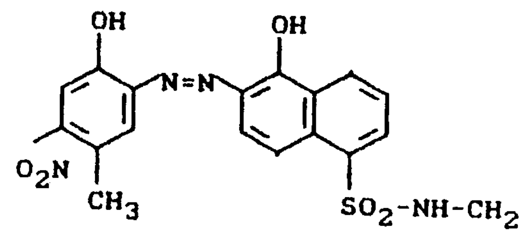 |
| 28 | 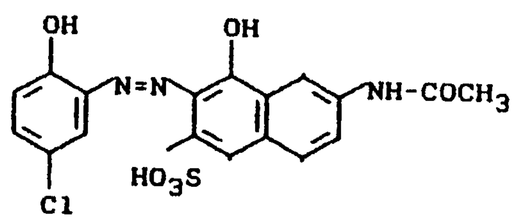 | 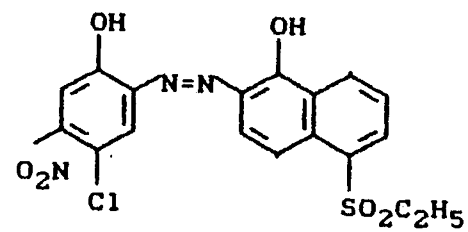 |

| Nr. | Farbstoff (1) | Farbstoff (2) |
|---|---|---|
| 29 | 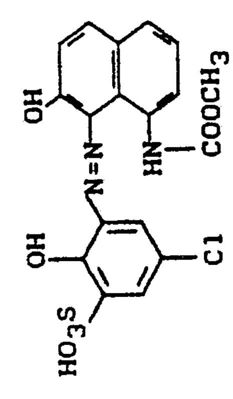 | 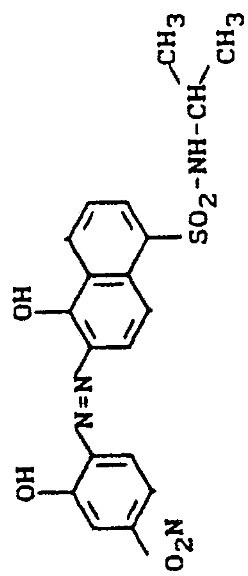 |
| 30 | 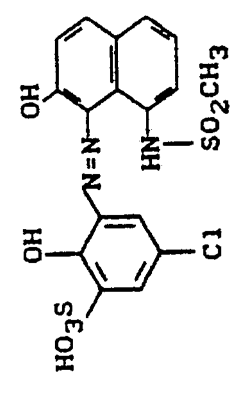 | 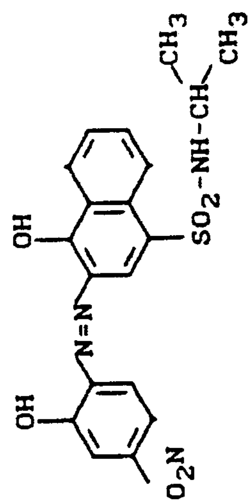 |
| 31 | 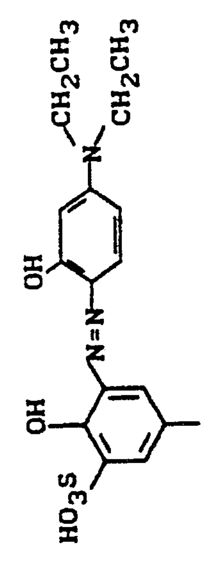 | 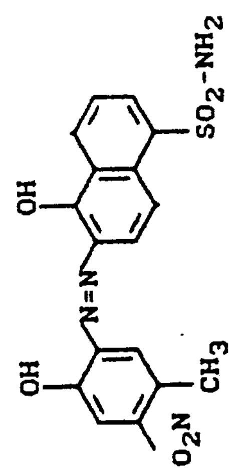 |

## Beispiel 32

0,1 Mol Farbstoff aus diazotiertem 4-Chlor-5-nitro-2-amino-1-hydroxybenzol und 1-Naphthol-5-sulfonamid und 0,1 Mol Chrom-1:1-Komplex des Farbstoffes aus diazotierter 4-Nitro-2-amino-1-hydroxybenzol-6-sulfonsäure und 1-Phenyl-3-methyl-5-pyrazolon werden gemeinsam in 800 ml Wasser auf 80 °C erwärmt. Man rührt das Gemisch etwa eine Stunde lang bei dieser Temperatur und hält den pH-Wert von 7,5 - 8 durch Zutropfen von insgesamt 45 ml 5 n Natronlauge. Der gebildete 1:2-Chromkomplex der Formel

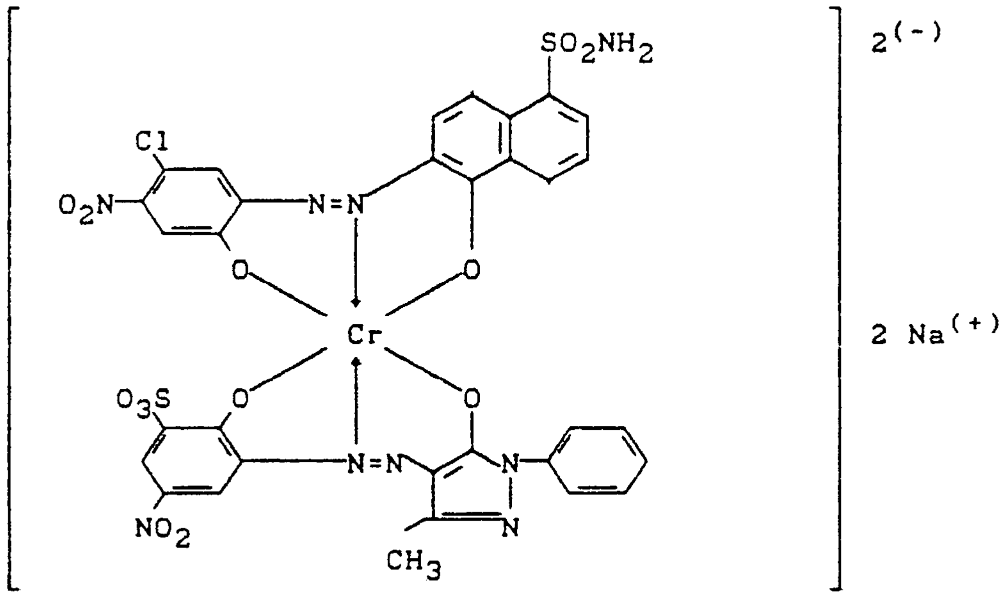

wird durch Aussalzen und Absaugen isoliert. Nach dem Trocknen erhält man ein dunkles Pulver, welches Wolle, Polyamid und Leder in lichtechten braunstichig violetten Tönen färbt.

Beispiel 33 bis 45

Weitere 1:2-Chromkomplexfarbstoffe mit ähnlich guten Eigenschaften erhält man aus den Komponenten (1) und (2) der folgenden Tabelle. Die Herstellung erfolgt analog Beispiel 32 durch Anlagerung der Komponente (2) an den Chrom-1:1-Komplex der Komponente (1). Die Farbstoffe färben Wolle, Polyamid und Leder in dem in der Tabelle angegebenen Farbton.

| Nr. | Farbstoff (1) | Farbstoff (2) | Farbton |
|---|---|---|---|
| 33 | 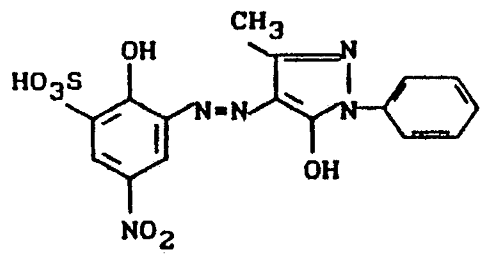 | 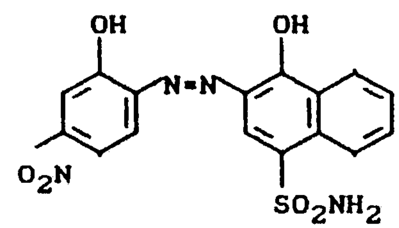 | rotbraun |
| 34 | 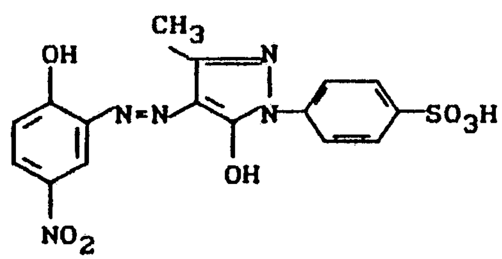 | 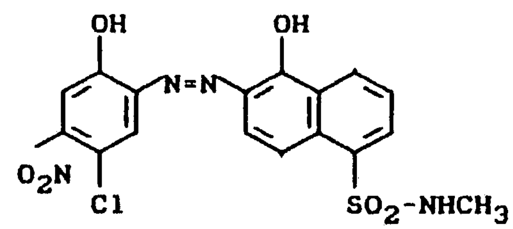 | violettbraun |
| 35 | 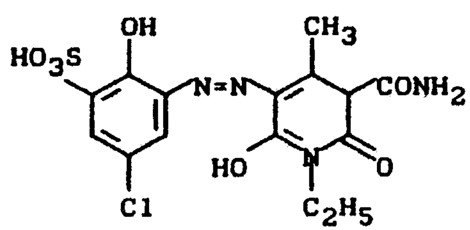 | 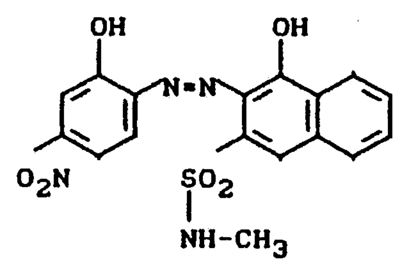 | violett |

| Nr. | Farbstoff (1) | Farbstoff (2) | Farbton |
|---|---|---|---|
| 36 | 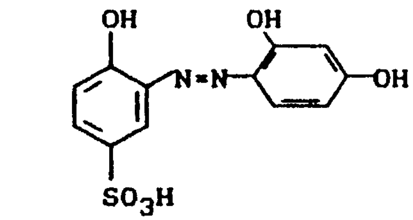 | 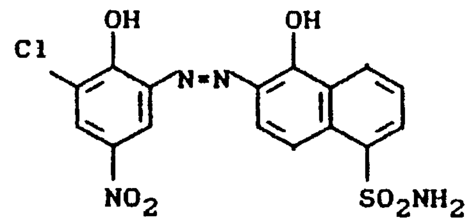 | marineblau |
| 37 | 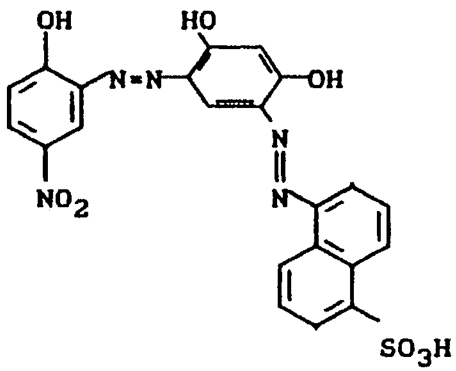 | 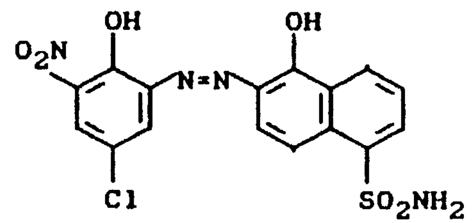 | schwarzbraun |
| 38 | 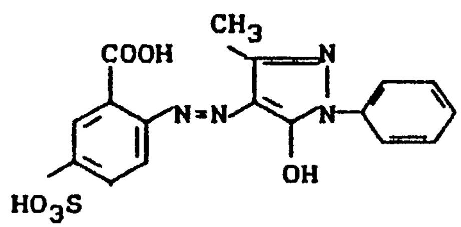 | 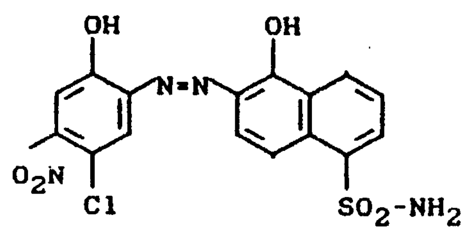 | grün |

| Nr. | Farbstoff (1) | Farbstoff (2) | Farbton |
|---|---|---|---|
| 39 | 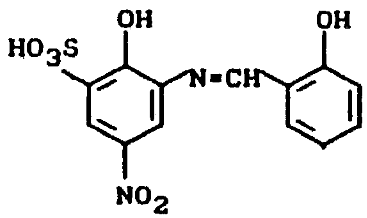 | 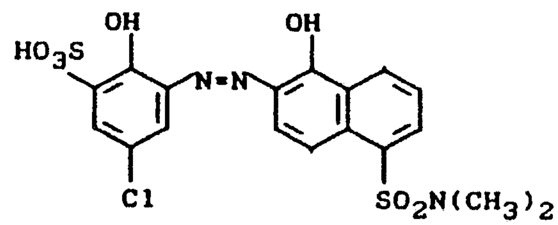 | grün |
| 40 | 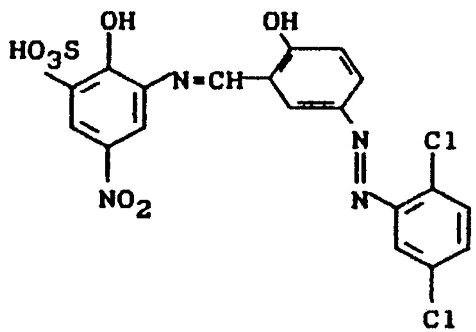 | 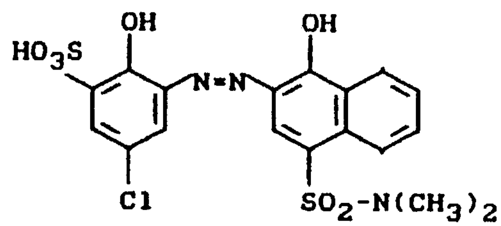 | olivgrün |
| 41 | 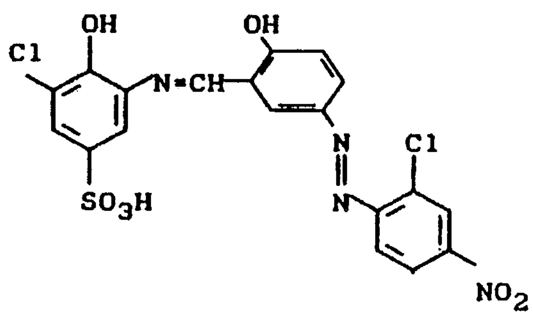 | 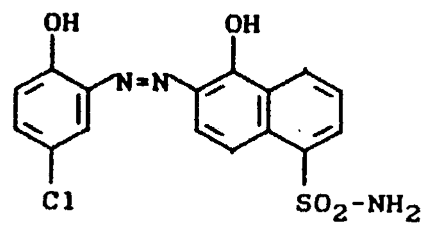 | braun |

| Nr. | Farbstoff (1) | Farbstoff (2) | Farbton |
|---|---|---|---|
| 42 | 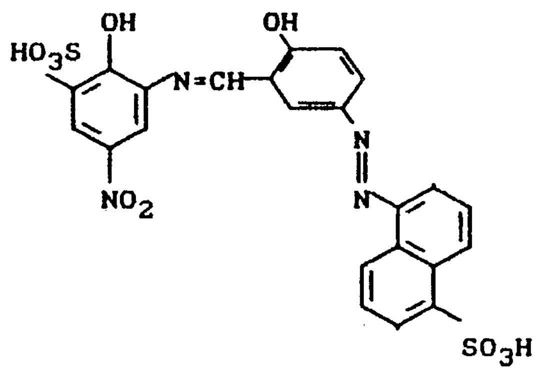 | 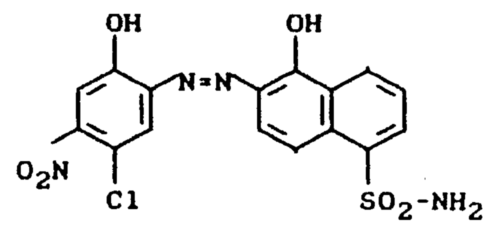 | olivbraun |
| 43 | 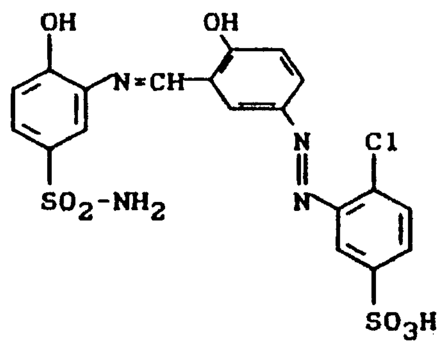 | 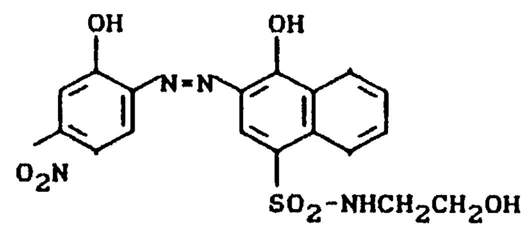 | olivgrün |

| Nr. | Farbstoff (1) | Farbstoff (2) | Farbton |
|---|---|---|---|
| 44 | 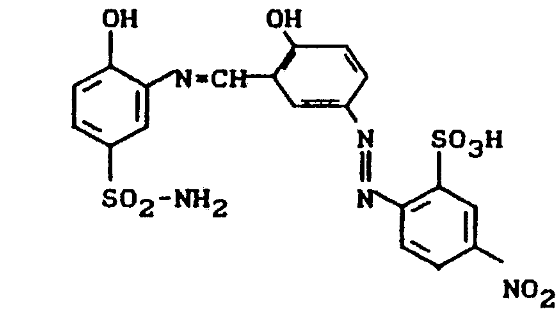 | 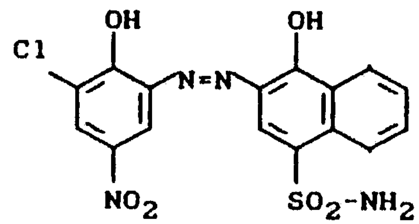 | braun |
| 45 | 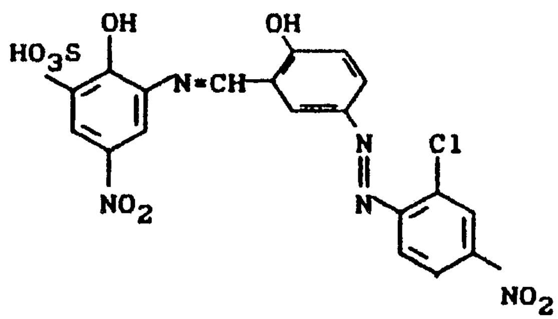 | 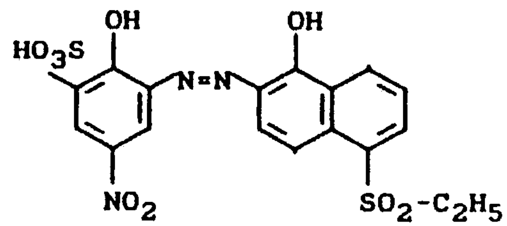 | braun |

Beispiel 46

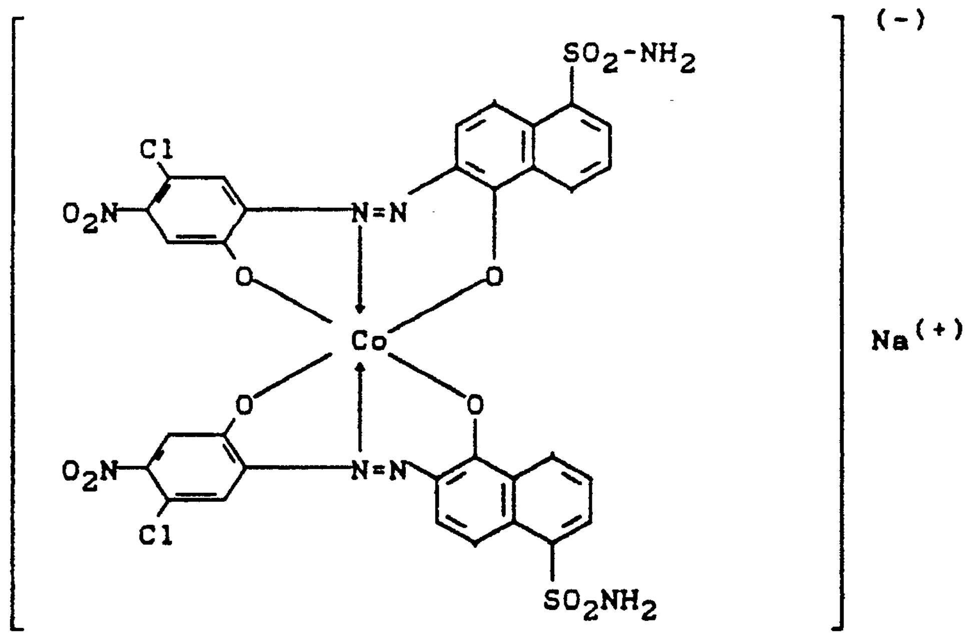

+

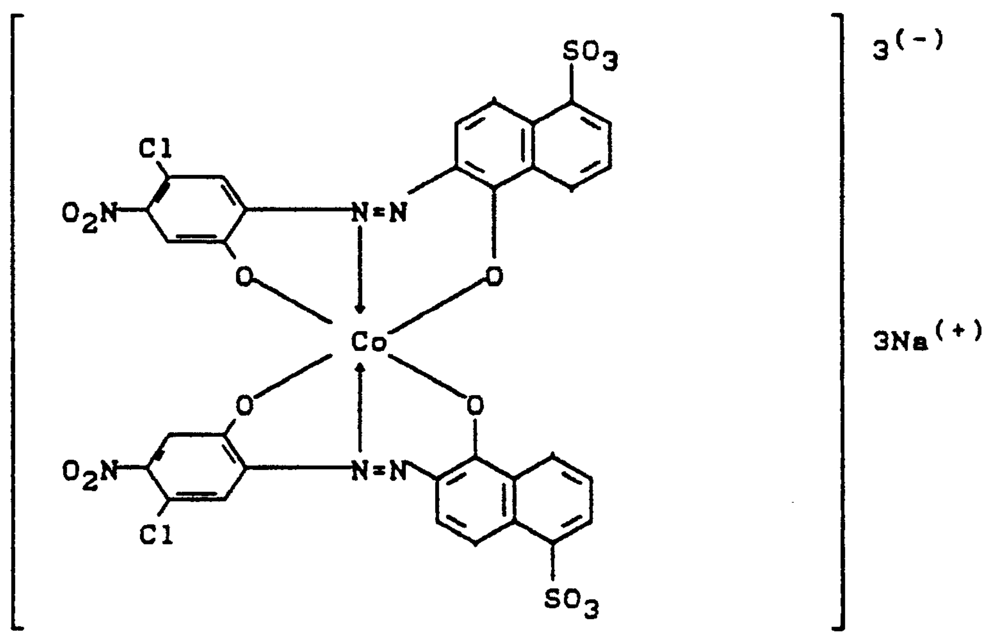

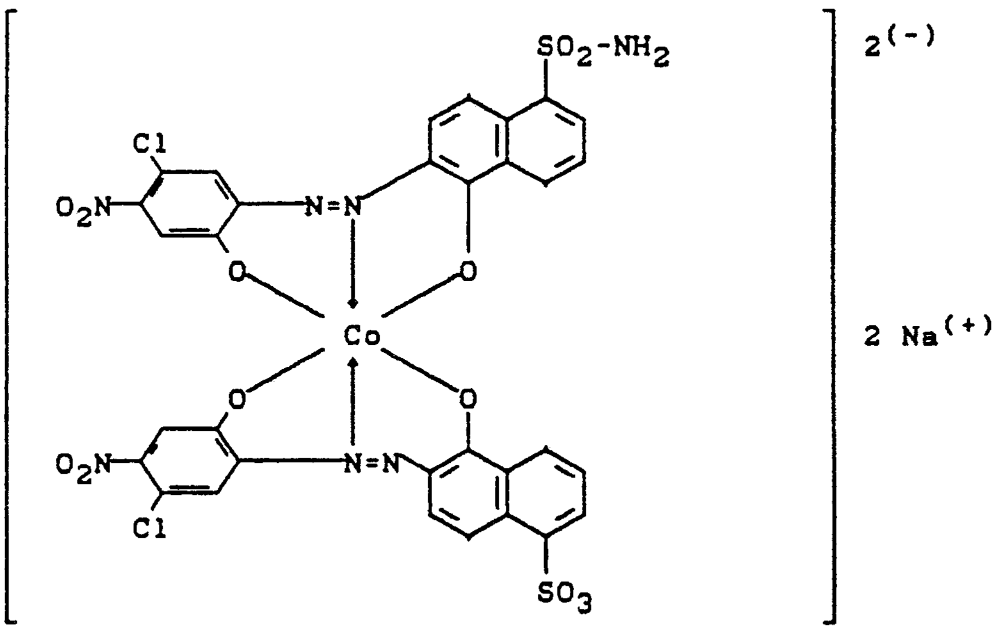

0,1 Mol Farbstoff aus diazotiertem 4-Chlor-5-nitro-2-amino-1-hydroxybenzol und 1-Naphthol-5-sulfonsäure und 0,1 Mol Farbstoff aus dem gleichen Diazoniumsalz und 1-Naphthol-5-sulfonamid werden in 800 ml Wasser miteinander verrührt. Man setzt 0,1 Mol Kobaltsulfat zu, stellt den pH mit 5 n Natronlauge auf 10 und hält ihn während der gesamten Reaktion durch Zutropfen von Natronlauge auf dieser Höhe. Das Gemisch wird innerhalb von 1 Stunde auf 70 °C erwärmt und zwei Stunden bei dieser Temperatur gerührt, bis beide Ausgangsfarbstoffe vollständig umgesetzt sind. Die Lösung der kobalthaltigen Farbstoffe wird zur Trockne eingeengt. Das dabei anfallende schwarze Pulver färbt Leder in lichtechten marineblauen Tönen.

Beispiel 47 bis 58

Auf dem in Beispiel 46 skizzierten Weg gelangt man zu weiteren lichtechten 1:2-Kobaltkomplexfarbstoffen, wenn man von den Farbstoffen (1) und (2) der folgenden Tabelle ausgeht. Bei stöchiometrischem Verhältnis der Ausgangsfarbstoffe erhält man gut deckende Lederfärbungen mit dem in der letzten Spalte angegebenen Farbton.

| Nr. | Farbstoff (1) | Farbstoff (2) | Farbton |
|---|---|---|---|
| 47 | 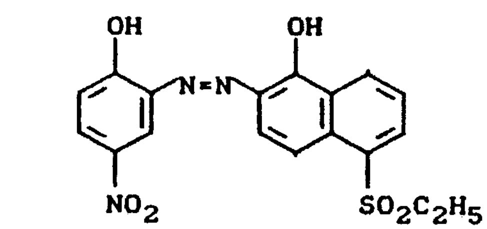 | 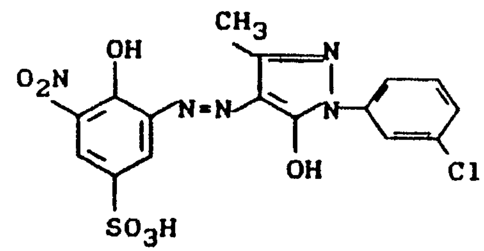 | rotbraun |
| 48 | 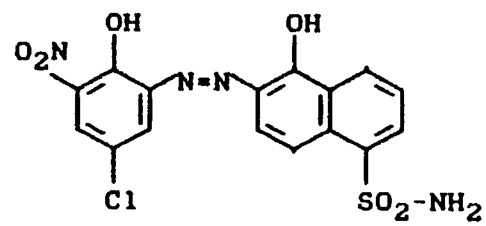 | 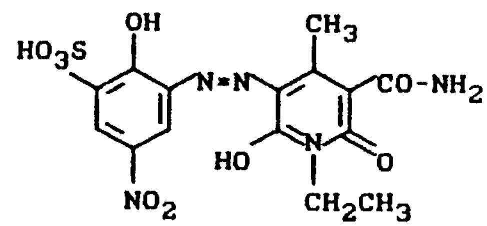 | dunkelbraun |
| 49 | 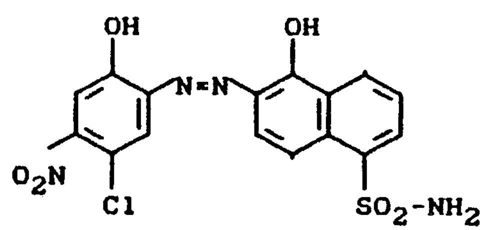 | 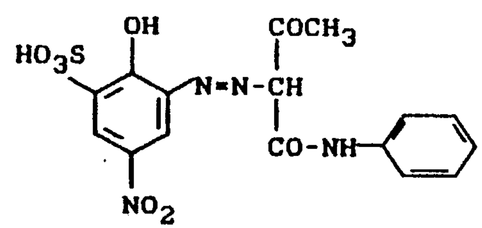 | oliv |

| Nr. | Farbstoff (1) | Farbstoff (2) | Farbton |
|---|---|---|---|
| 50 | 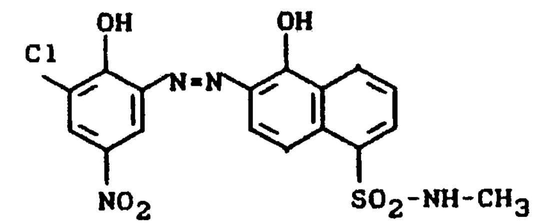 | 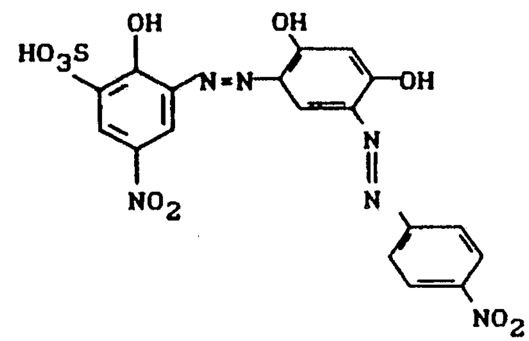 | rotbraun |
| 51 | 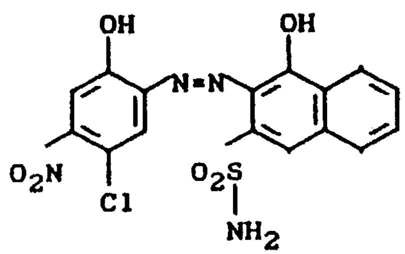 | 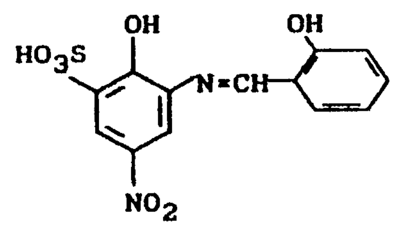 | olivgrün |

| Nr. | Farbstoff (1) | Farbstoff (2) | Farbton |
|---|---|---|---|
| 52 | 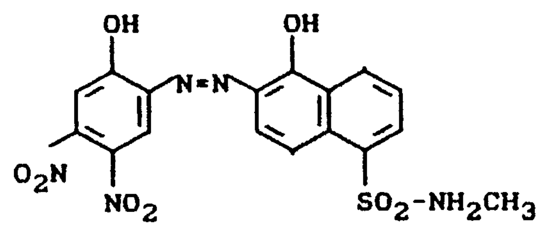 | 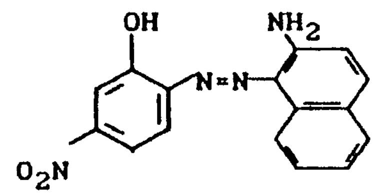 | grünstichig blau |
| 53 | 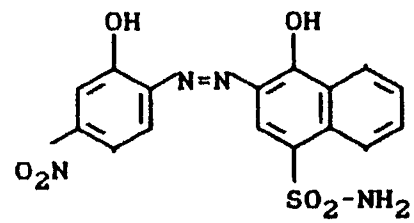 | 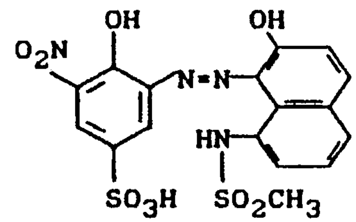 | rotstichig schwarz |
| 54 | 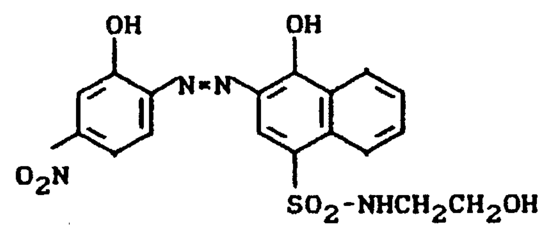 | 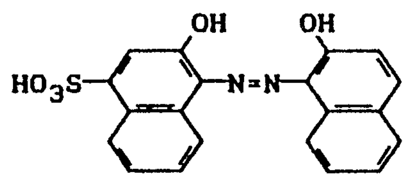 | korinthblau |

| Nr. | Farbstoff (1) | Farbstoff (2) | Farbton |
|---|---|---|---|
| 55 | 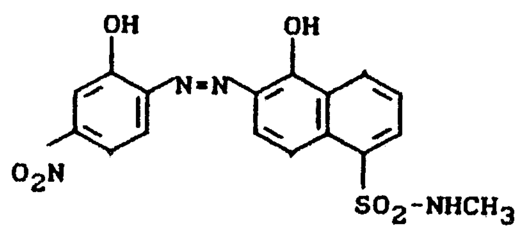 | 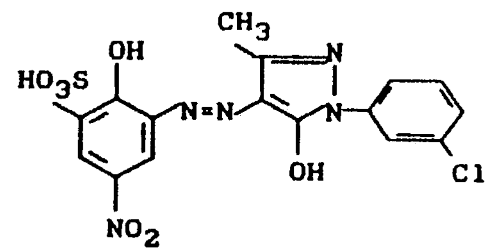 | oliv |
| 56 | 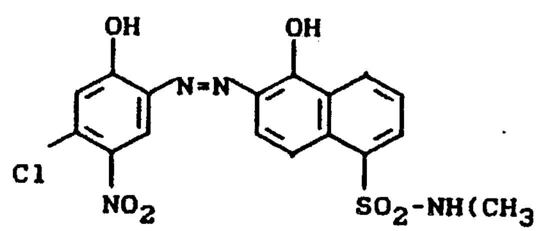 | 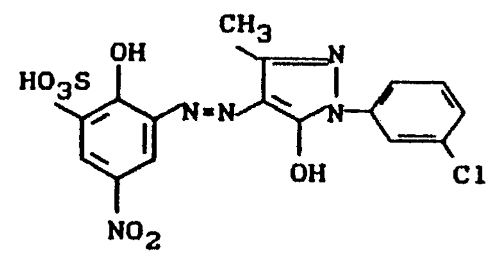 | braun |

| Nr. | Farbstoff (1) | Farbstoff (2) | Farbton |
|---|---|---|---|
| 57 | 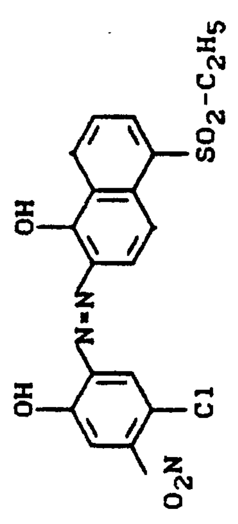 | 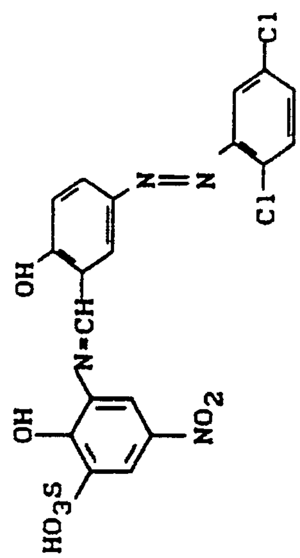 | oliv |
| 58 | 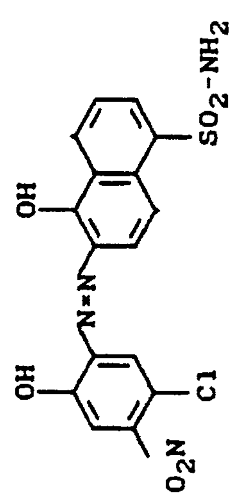 | 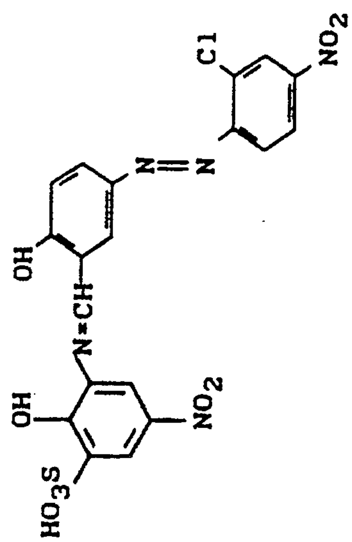 | gelbstichig braun |

## Patentansprüche

1. Asymmetrische 1:2-Metallkomplexfarbstoffe der Formel

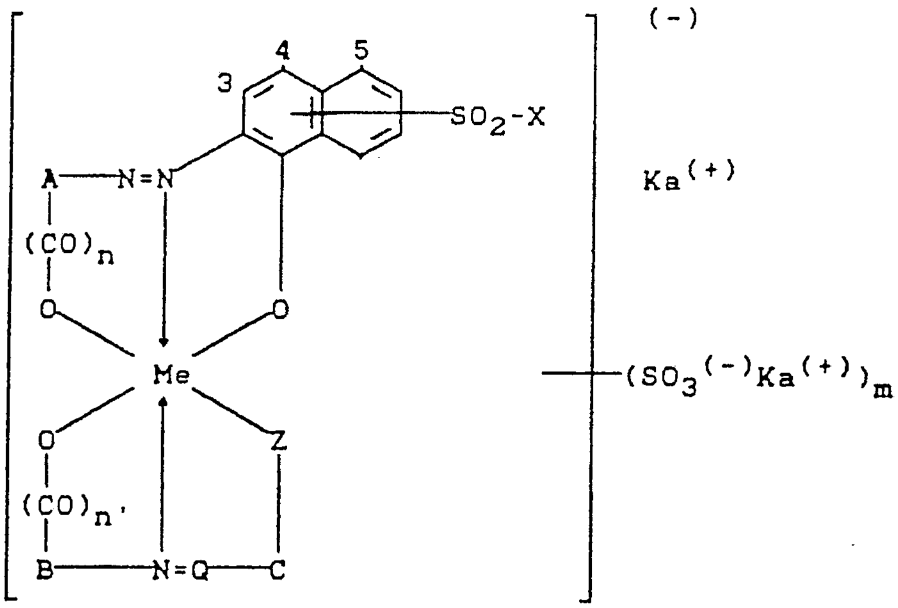

(I),

worin

| | |
|---|---|
| $SO_2$-X | in 3-, 4- oder 5-Stellung steht, |
| X | $NH_2$, durch Alkyl, Cycloalkyl, Aralkyl oder Aryl mono- oder disubstituiertes $NH_2$ oder Alkyl, |
| A | einen Rest der Benzol- oder Naphthalinreihe mit zur Azogruppe o-ständiger Hydroxy- oder Carboxygruppe, |
| B | einen Rest der Benzol- oder Naphthalinreihe mit zur Azo- bzw. Azomethingruppe o-ständiger Hydroxy- oder Carboxygruppe, |
| C | einen Rest einer carbocyclischen oder heterocyclischen Kupplungskomponente, wenn Q Stickstoff ist, wobei die metallbindende Gruppe Z in o-Stellung zur Azogruppe steht, oder, falls Q die CH-Gruppe ist, den Rest eines o-Hydroxyaldehyds, |
| Q | Stickstoff oder CH, |
| Z | Sauerstoff, NH oder N-Alkyl, |
| Me | Chrom oder Kobalt, |
| n, n' | unabhängig voneinander 0 oder 1, |
| m | 1, 2 oder 3 und |
| $Ka^{(+)}$ | ein Kation bedeuten, wobei |

die Reste A, B und C weitere Substituenten aus der Reihe Sulfo, Sulfamoyl, COOH, Carbamoyl, Acylamino, Alkylsulfonyl, Arylsulfonyl, Alkyl, Alkoxy, $NO_2$, $NH_2$, mono- oder dialkylsubstituiertes $NH_2$, OH, Cl, Br, CN, $CF_3$ oder Arylazo tragen können, sowie durch Mischchromierung oder Mischkobaltierung der entsprechenden Ausgangsfarbstoffe erhältlichen Gemische.

**2.** Farbstoffe des Anspruchs 1 der Formel

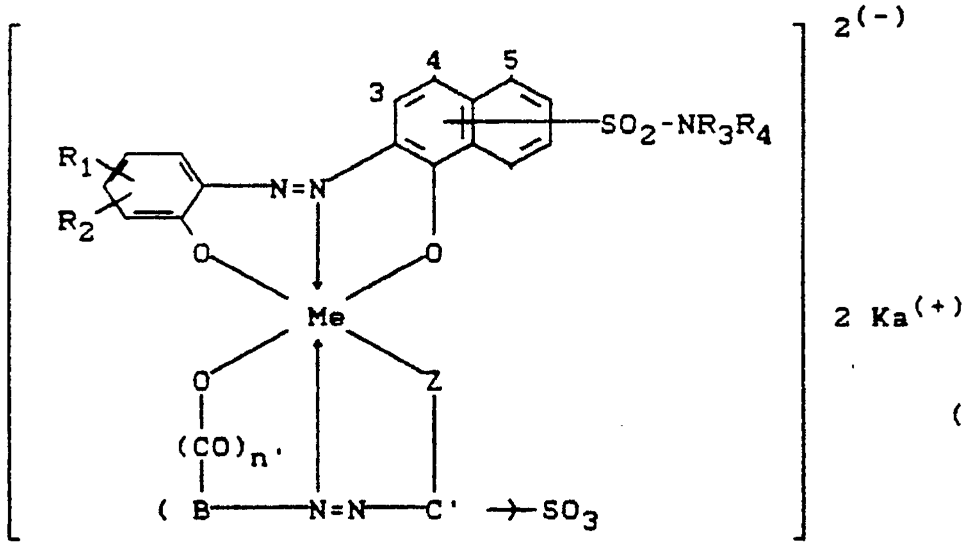

(II),

und

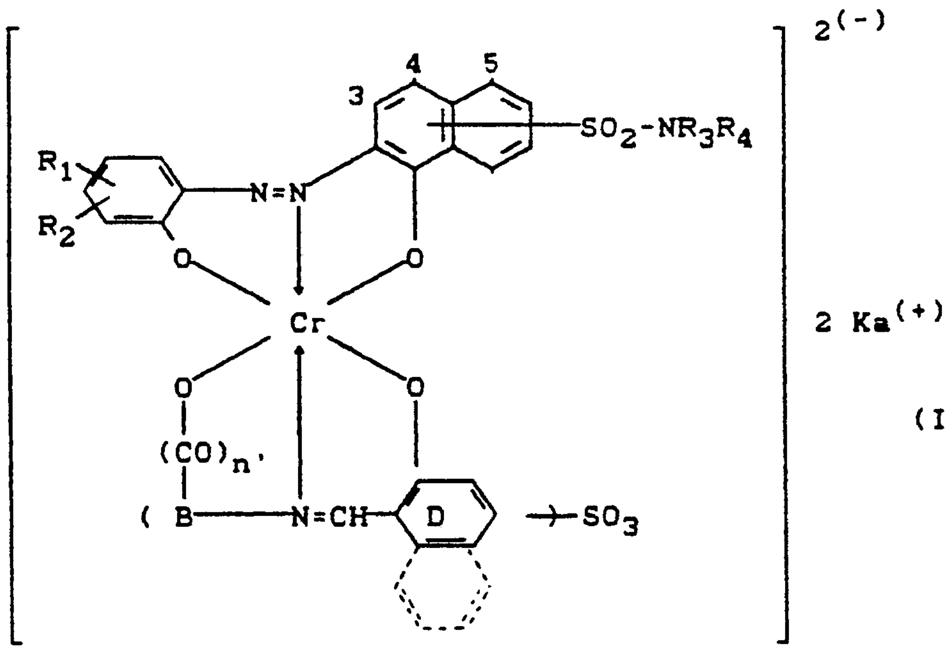

(III),

worin

$SO_2$-$NR_3R_4$ in 3-, 4- oder 5-Stellung steht,

die Symbole Me, B, Z, $Ka^{(+)}$ und n' die obengenannte Bedeutung haben,

| | |
|---|---|
| $R_1$, $R_2$ | unabhängig voneinander für H, Cl, $NO_2$, $CH_3$ oder $OCH_3$, |
| $R_3$ | für H oder Alkyl, |
| $R_4$ | für H, Alkyl oder Aryl und |
| C' | für den Rest eines gegebenenfalls substituierten Naphthalins, Pyrazols oder Acetessigsäureamids stehen |

und

Ring D außer der Sulfogruppe noch durch Alkyl, Cl, Br oder Arylazo substituiert sein kann.

3. Farbstoffe des Anspruchs 2 der Formel

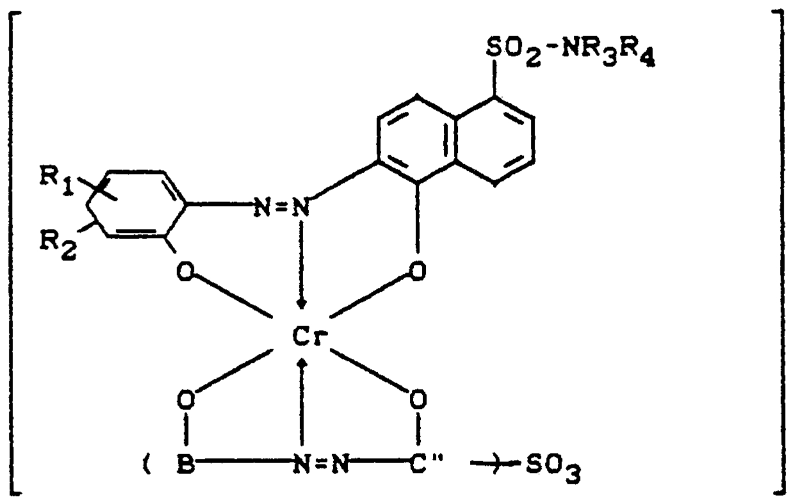

$2^{(-)}$ $2\ Ka^{(+)}$ (IV),

und

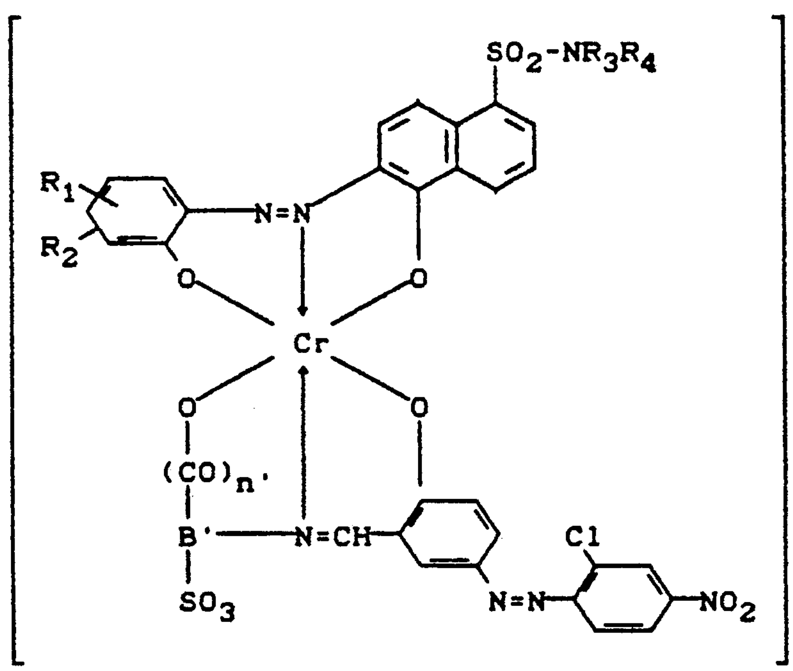

$2^{(-)}$ $2\ Ka^{(+)}$ (V),

worin

die Symbole $R_1$, $R_2$, $R_3$, $R_4$, B, $Ka^{(+)}$ und n die obengenannte Bedeutung haben und

C″ für den Rest eines gegebenenfalls durch $SO_3H$, $CH_3$, Cl oder den zweiwertigen Rest $O\text{-}CH_2\text{-}SO_2$ substituierten 1-Naphthols oder für den Rest eines gegebenenfalls durch $SO_3H$, Acetylamino oder Methylsulfonylamino substituierten 2-Naphthols und

B′ sofern n gleich null, für den Rest eines sulfogruppenhaltigen o-Aminophenols, welches noch durch Cl oder $NO_2$ substituiert sein kann, oder, sofern n gleich 1, für den Rest einer

sulfogruppenhaltigen Anthranilsäure stehen kann.

4. Farbstoffgemische, erhältlich durch Mischchromierung oder Mischkobaltierung von Farbstoffen der Formel

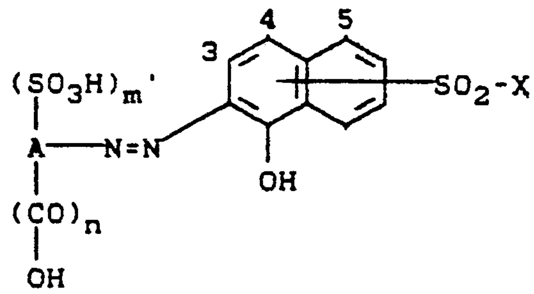

(VI)

und Farbstoffen der Formel

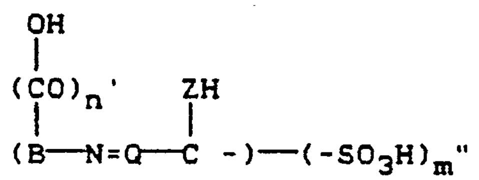

(VII),

worin

| | |
|---|---|
| $SO_2$-X | in 3-, 4- oder 5-Stellung steht, |
| X = | $NH_2$, durch Alkyl, Cycloalkyl, Aralkyl oder Aryl mono- oder disubstituiertes $NH_2$ oder Alkyl, |
| A = | Rest der Benzol- oder Naphthalinreihe mit zur Azogruppe o-ständiger Hydroxy- oder Carboxygruppe, |
| m' = | 0 oder 1, |
| B, Q, Z | die in Anspruch 1 angegebene Bedeutung haben und |
| m" | 1 oder 2 bedeutet. |

5. Verwendung der Farbstoffe der Ansprüche 1 - 4 zum Färben und Bedrucken von natürlichen und synthetischen amidgruppenhaltigen Materialien.

**Claims**

1. Asymmetric 1:2 metal complex dyestuffs of the formula

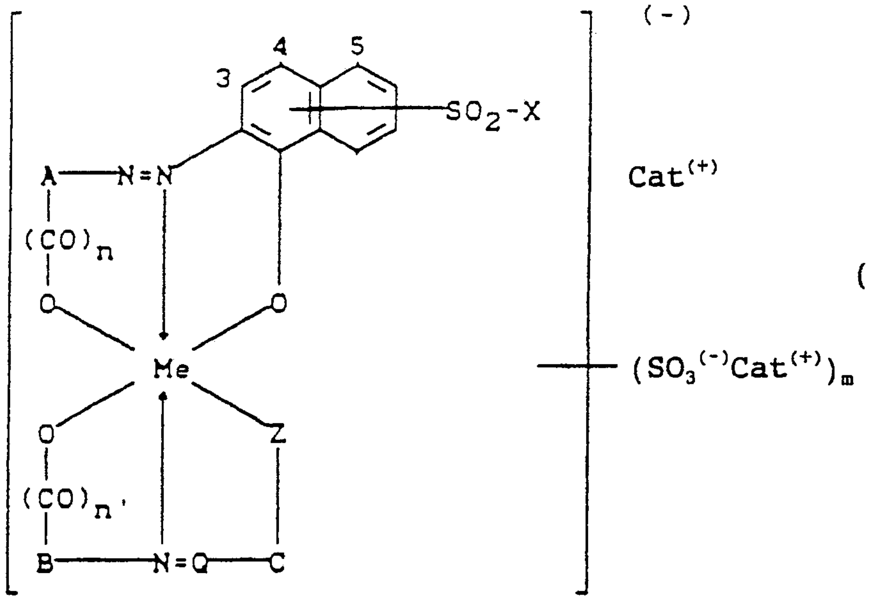

(I),

in which

| | |
|---|---|
| $SO_2$-X | is in the 3, 4 or 5 position, |
| X | is $NH_2$, or $NH_2$ which is mono- or disubstituted by alkyl, cycloalkyl, aralkyl or aryl, or is alkyl, |
| A | is a radical from the benzene or naphthalene series containing a hydroxyl or carboxyl group which is in the o position relative to the azo group, |
| B | is a radical from the benzene or naphthalene series containing a hydroxyl or carboxyl group which is in the o position relative to the azo or azomethine group, |
| C | is a radical of a carbocyclic or heterocyclic coupling component when Q is nitrogen, in which the metal-binding group Z is in the o position relative to the azo group, or, when Q is a CH group, the radical of an o-hydroxyaldehyde, |
| Q | is nitrogen or CH, |
| Z | is oxygen, NH or N-alkyl, |
| Me | is chromium or cobalt, |
| n, n' | are, independently of one another, 0 or 1, |
| m | is 1, 2 or 3 and |
| $Cat^{(+)}$ | is a cation, in which |

the radicals A, B and C can carry further substituents from the series comprising sulpho, sulphamoyl, COOH, carbamoyl, acylamino, alkylsulphonyl, arylsulphonyl, alkyl, alkoxy, $NO_2$, $NH_2$, mono- or dialkyl-substituted $NH_2$, OH, Cl, Br, CN, $CF_3$ or arylazo, and mixtures obtainable by mixed chroming or mixed cobalting of the corresponding starting dyestuffs.

**2.** Dyestuffs of Claim 1 of the formula

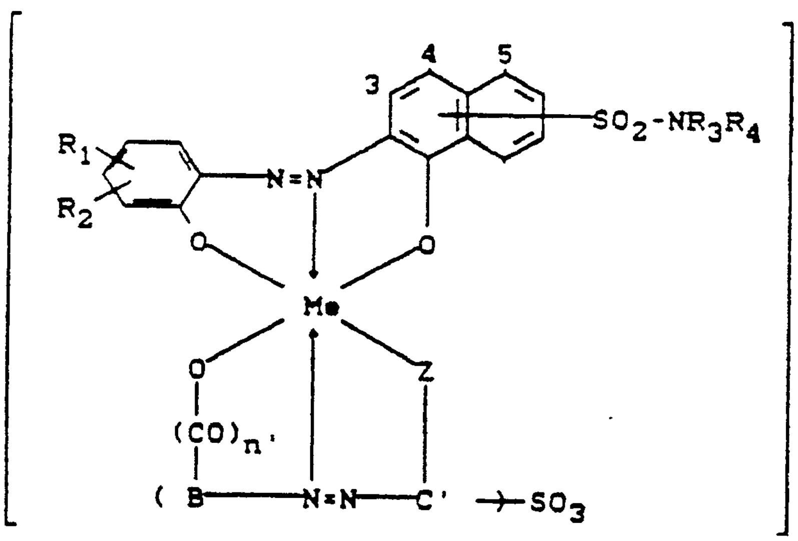

$2^{(-)}$

$2\ Cat^{(+)}$

(II),

and

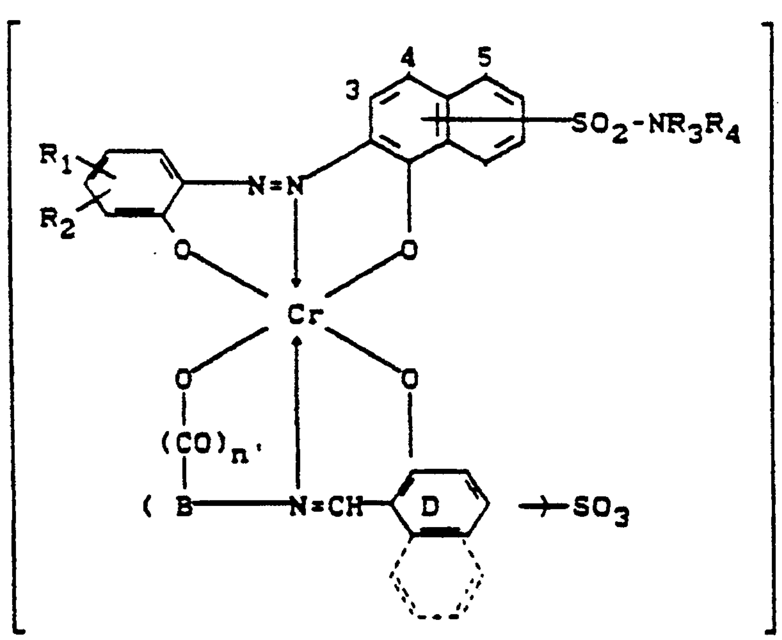

$2^{(-)}$

$2\ Cat^{(+)}$

(III),

in which

$SO_2$-$NR_3R_4$ is in the 3, 4 or 5 position,

the symbols Me, B, Z, $Cat^{(+)}$ and n' have the above-mentioned meaning,

- $R_1$, $R_2$ represent, independently of one another, H, Cl, $NO_2$, $CH_3$ or $OCH_3$,
- $R_3$ represents H or alkyl,
- $R_4$ represents H, alkyl or aryl and
- C' represents the radical of a substituted or unsubstituted naphthalene, pyrazole or acetamide

and

- ring D can be substituted by alkyl, Cl, Br or arylazo, apart from the sulpho group, additionally.

3. Dyestuffs of Claim 2 of the formula

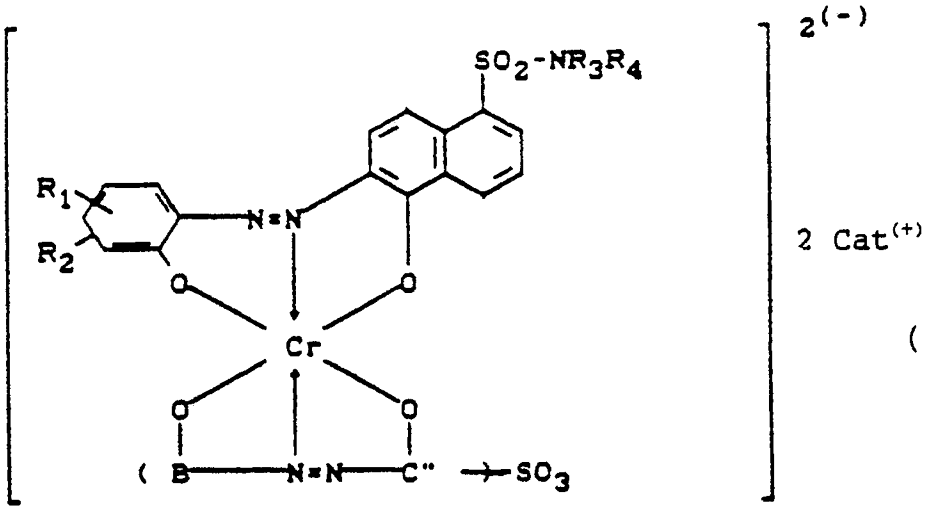

(IV),

and

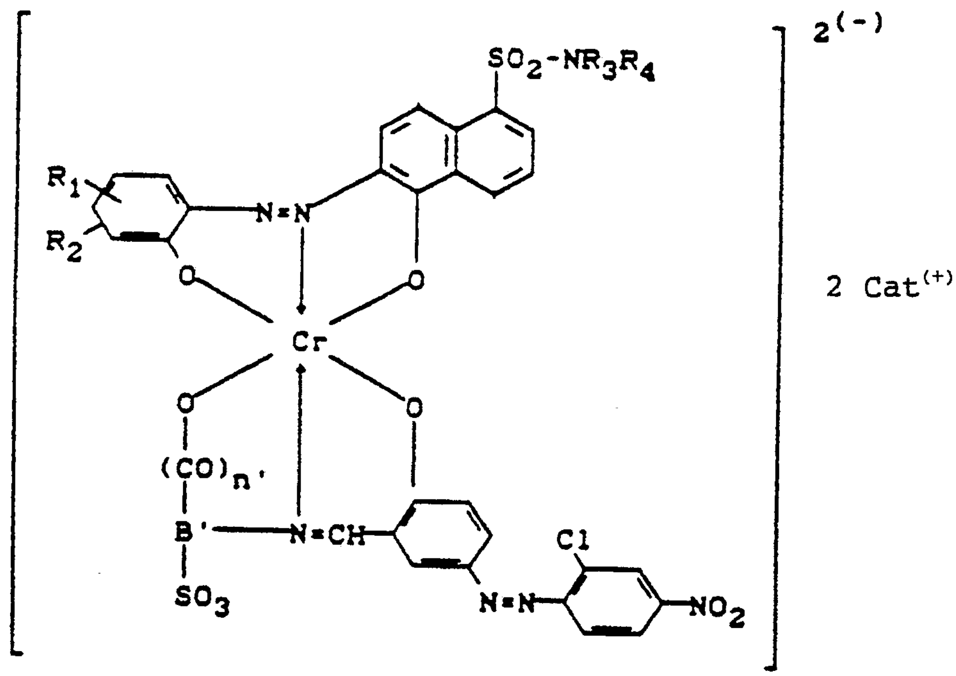

(V),

in which

the symbols $R_1$, $R_2$, $R_3$, $R_4$, B, $Cat^{(+)}$ and n have the above-mentioned meaning and

C" represents the radical of a 1-naphthol which is unsubstituted or substituted by $SO_3H$, $CH_3$ or Cl or the divalent radical $O-CH_2-SO_2$ or represents the radical of a 2-naphthol which is unsubstituted or substituted by $SO_3H$, acetylamino or methylsulphonylamino and

B' represents, if n is zero, the radical of a sulpho-containing o-aminophenol which can additionally be substituted by Cl or $NO_2$, or, if N is 1, represents the radical of a sulpho-containing anthranilic acid.

4. Dyestuff mixtures obtainable by mixed chroming or mixed cobalting of dyestuffs of the formula

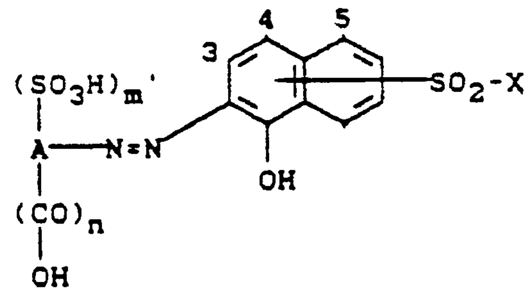

(VI)

and dyestuffs of the formula

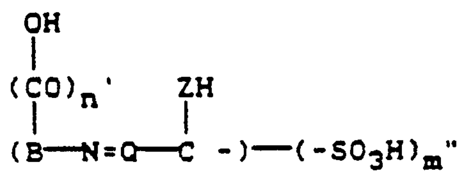

(VII),

in which

| | |
|---|---|
| $SO_2$-X | is in the 3, 4 or 5 position, |
| X | is $NH_2$, or $NH_2$ which is mono- or disubstituted by alkyl, cycloalkyl, aralkyl or aryl, or is alkyl, |
| A | is a radical from the benzene or naphthalene series containing a hydroxyl or carboxyl group which is in the o position relative to the azo group, |
| m' | is 0 or 1, |
| B, Q, Z | have the meaning given in Claim 1 and |
| m" | is 1 or 2. |

5. Use of the dyestuffs of Claims 1 - 4 for the dyeing and printing of natural and synthetic amido-containing materials.

## Revendications

1. Colorants complexes de métal 1:2 asymétriques de formule

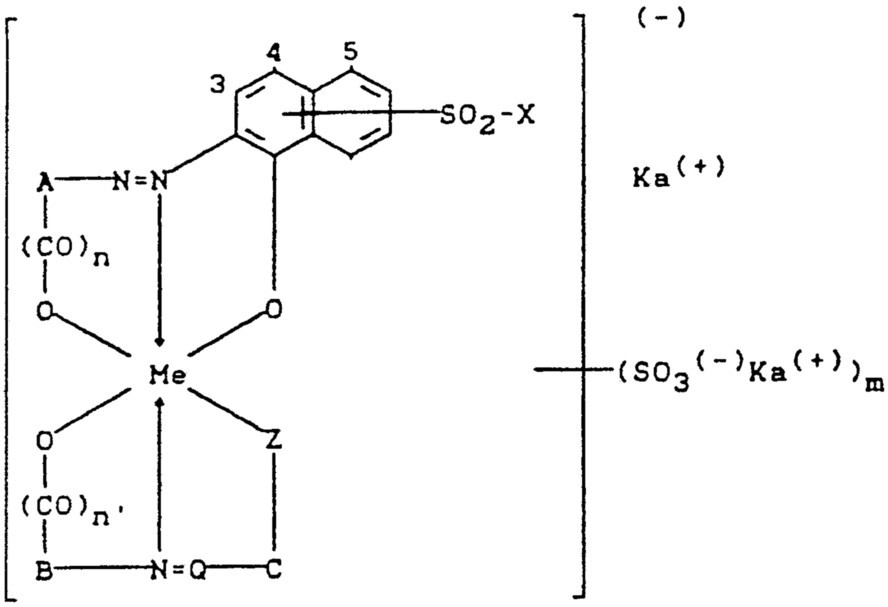

(I)

dans laquelle

$SO_2$-X se trouve en position 3, 4 ou 5,

X représente $NH_2$, un groupe $NH_2$ monosubstitué ou disubstitué par un radical alkyle, cycloalkyle, aralkyle ou aryle, ou un groupe alkyle,

A est un reste de la série du benzène ou du naphtalène portant un groupe hydroxy ou carboxy en position ortho par rapport au groupe azo,

B est un reste de la série du benzène ou du naphtalène portant un groupe hydroxy ou carboxy en position ortho par rapport au groupe azo ou azométhine,

C est un reste d'un copulant carbocyclique ou hétérocyclique, lorsque Q est l'azote, le groupe Z de liaison au métal étant en position ortho par rapport au groupe azo, ou bien, au cas où Q est le groupe CH, le reste d'un o-hydroxyaldéhyde,

Q représente l'azote ou un groupe CH,

Z est l'oxygène, un groupe NH ou N-alkyle,

Me est le chlore ou le cobalt,

$\underline{n}$, $\underline{n'}$ ont, indépendamment l'un de l'autre, la valeur 0 ou l,

$\overline{m}$ a la valeur 1, 2 ou 3 et

$\overline{Ka}^{(+)}$ désigne un cation,

les restes A, B et C pouvant porter d'autres substituants de la série sulfo, sulfamoyle, COOH, carbamoyle, acylamino, alkylsulfonyle, arylsulfonyle, alkyle, alkoxy, $NO_2$, $NH_2$, $NH_2$ mono-alkylé ou dialkylé, OH, Cl, Br, CN, $CF_3$ ou arylazo, ainsi que des mélanges produits par incorporation mixte de chrome ou incorporation mixte de cobalt dans les colorants de départ correspondants.

**2.** Colorants suivant la revendication 1, de formule

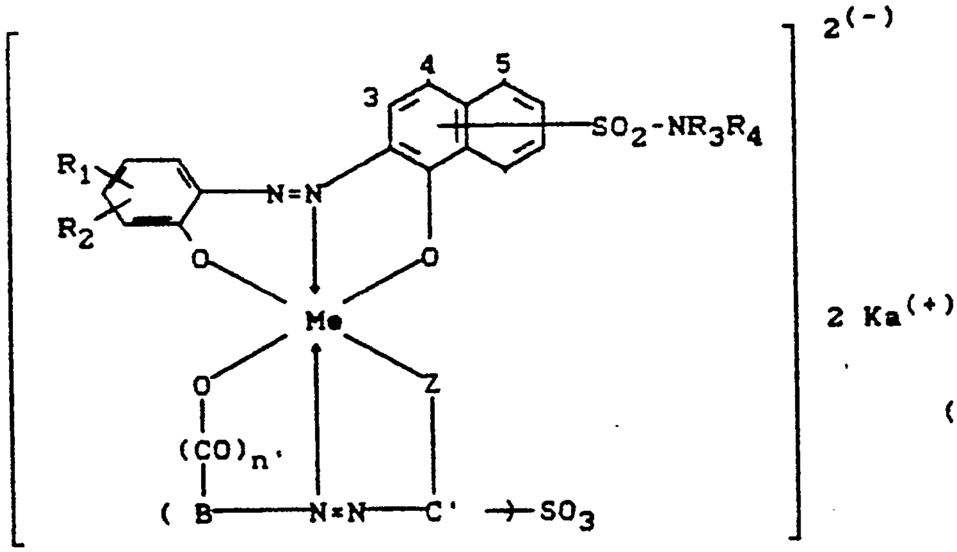

(II)

et

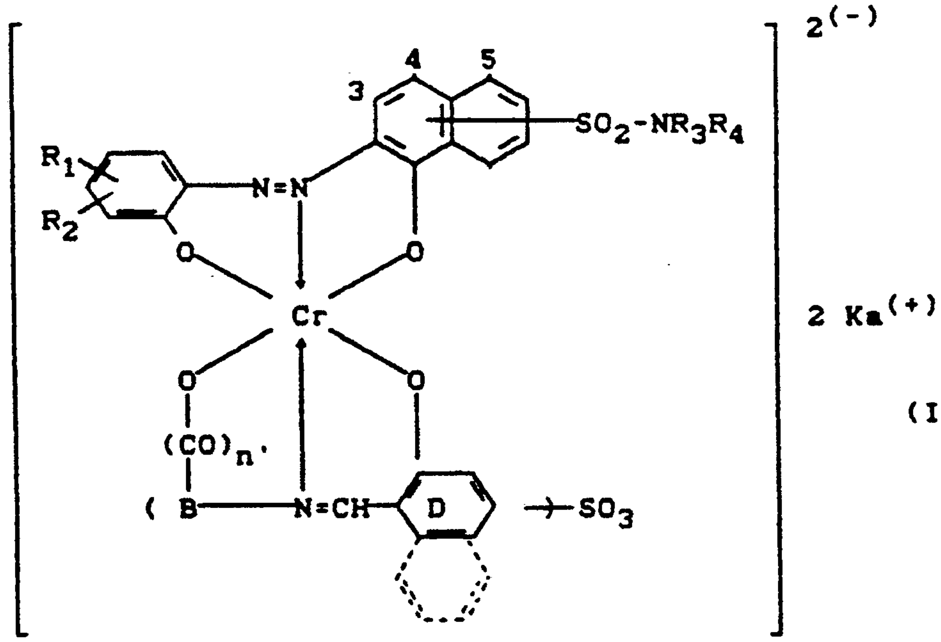

(III)

dans lesquelles

$SO_2$-$NR_3R_4$ se trouve en position 3, 4 ou 5,

les symboles Me, B, Z, $Ka^{(+)}$ et n' ont la définition indiquée ci-dessus,

- $R_1$, $R_2$ représentent, indépendamment l'un de l'autre, H, Cl, $NO_2$, $CH_3$ ou $OCH_3$,
- $R_3$ représente H ou un groupe alkyle,
- $R_4$ représente H, un groupe alkyle ou aryle et
- C' représente le reste d'un naphtalène, pyrazole ou amide d'acide acétylacétique éventuellement substitué

et

- le noyau D peut encore être substitué par un radical alkyle, Cl, Br ou arylazo, en plus du groupe sulfo.

**3.** Colorants suivant la revendication 2, de formules

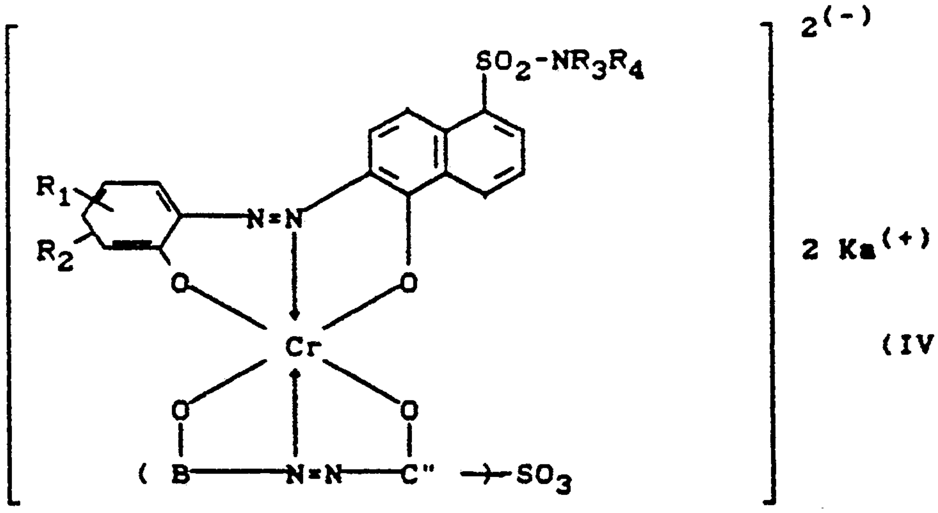

(IV).

et

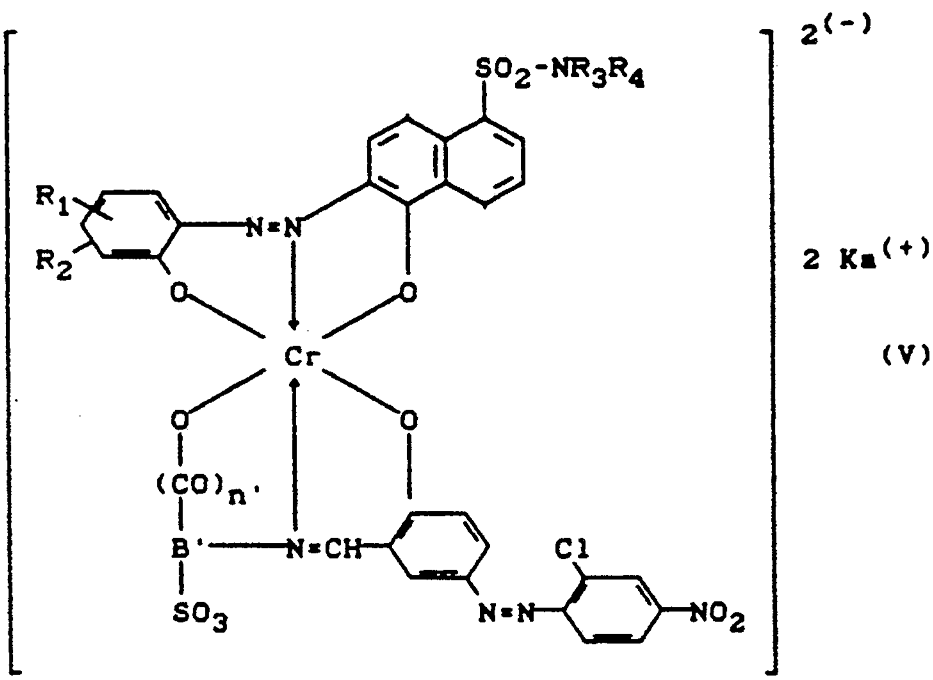

(V)

dans lesquelles

les symboles $R_1$, $R_2$, $R_3$, $R_4$, B, $Ka^{(+)}$ et n ont la définition indiquée ci-dessus et

C" représente le reste d'un 1-naphtol éventuellement substitué par $SO_3H$, $CH_3$, Cl ou le reste divalent $O-CH_2-SO_2$ ou représente le reste d'un 2-naphtol éventuellement substitué par un radical $SO_3H$, acétylamino ou méthylsulfonylamino et

B' dans la mesure où n est nul, représente le reste d'un o-aminophénol porteur d'un groupe sulfo, qui peut encore être substitué par Cl ou $NO_2$, ou, dans la mesure où n est égal à 1, représente le reste d'un acide anthranilique portant un groupe sulfo.

**4.** Mélanges de colorants obtenus par incorporation mixte de chrome ou incorporation mixte de cobalt dans des colorants de formule

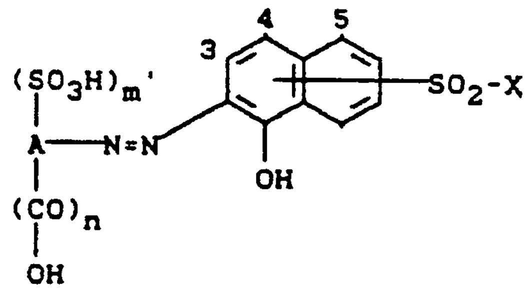

(VI)

et des colorants de formule

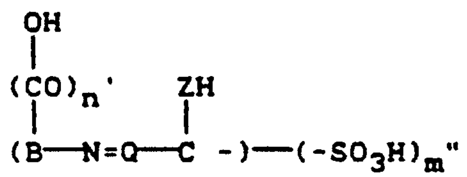

(VII)

formules dans lesquelles

| | |
|---|---|
| $SO_2$-X | se trouve en position 3, 4 ou 5, |
| X | est un groupe $NH_2$, un groupe $NH_2$ monosubstitué ou disubstitué par un radical alkyle, cycloalkyle, aralkyle ou aryle, ou un groupe alkyle, |
| A | est un reste de la série du benzène ou du naphtalène portant un groupe hydroxy ou carboxy en position ortho par rapport au groupe azo, |
| m' | a la valeur 0 ou 1, |
| $\overline{B}$, Q et Z | ont la définition indiquée dans la revendication 1 et |
| m" | a la valeur 1 ou 2. |

**5.** Utilisation des colorants suivant les revendications 1 à 4 pour la teinture et l'impression de matières naturelles et synthétiques portant des groupes amide.